# EUROPEAN PATENT APPLICATION

(11) **EP 4 675 479 A1**
(43) Date of publication of application: **07.01.2026**
(21) Application number: 23925394.1
(22) Date of filing: 05.12.2023
(51) Int. Cl.: G06F 21/60

(54) **ELECTRONIC DEVICE**

(30) Priority: 27.02.2023 JP 2023028679
(71) Applicant: Panasonic Intellectual Property Management Co., Ltd., Kadoma-shi, Osaka 571-0057 (JP)
(72) Inventor: TAKAHASHI, Katsunao, Kadoma-shi, Osaka 571-0057 (JP); KITAMIKADO, Masanori, Kadoma-shi, Osaka 571-0057 (JP)
(74) Representative: Grünecker Patent- und Rechtsanwälte PartG mbB
(86) International application number: PCT/JP2023/043445
(87) International publication number: WO 2024/180842

(57) **Abstract**

A client apparatus (1) is provided with: a first processing circuit (401); a communication device (15) capable of communicating with a server apparatus (2) via a communication line (6); a first storage device (13) that stores storage data including an operating system, application programs, and user data; and a nonvolatile memory (403) that stores a first firmware program and first setting information. The first firmware program is executed by the first processing circuit (401) to control operations of the client apparatus (1) based on the first setting information. In a case where the first processing circuit (401) receives a first erasure command from the server apparatus (2), the first erasure command instructing erasure of the storage data and the first setting information, the first processing circuit (401) executes the first firmware program to erase the storage data from the first storage device (13), and erase the first setting information from the nonvolatile memory (403).

## Description

### TECHNICAL FIELD

The present disclosure relates to an electronic apparatus, a system, and a method of erasing data stored in a storage device of the electronic apparatus.

### BACKGROUND ART

When an organization, such as a company, discards electronic apparatuses, such as personal computers, it is required to erase data stored in their storage devices in order to prevent leakage of confidential information on business.

Patent Document 1 discloses a data erasure management method of erasing data in a storage device of a terminal to be managed, and recording and managing the results in a management database per the terminal.

### CITATION LIST

### PATENT DOCUMENTS

PATENT DOCUMENT 1: Japanese Patent No. JP 4493677 B2

### SUMMARY OF INVENTION

### TECHNICAL PROBLEM

The electronic apparatus stores a firmware program, such as a unified extensible firmware interface (UEFI) or basic input/output system (BIOS) program, and setting information, such as a supervisor password thereof, separately from an operating system, application programs, and user data. Conventionally, in a case of erasing data stored in the electronic apparatus, although the operating system, application programs, and user data are erased, the setting information of the firmware program is not erased. Since the setting information of the firmware program may also include confidential data, it is required to more reliably erase data stored in the electronic apparatus.

The present disclosure provides an electronic apparatus capable of erasing stored data more reliably than the prior art. In addition, the present disclosure provides a system including such an electronic apparatus and a server apparatus. In addition, the present disclosure provides a method of erasing data stored in a storage device of an electronic apparatus.

### SOLUTION TO PROBLEM

According to the electronic apparatus of one aspect of the present disclosure, the electronic apparatus is provided with: a first processing circuit; a communication circuit capable of communicating with a server apparatus via a communication line; a first storage device that stores storage data including an operating system, application programs, and user data; and a second storage device that stores a first firmware program and first setting information. The first firmware program is executed by the first processing circuit to control operations of the electronic apparatus based on the first setting information. In a case where the first processing circuit receives a first erasure command from the server apparatus, the first erasure command instructing erasure of the storage data and the first setting information, the first processing circuit executes the first firmware program to erase the storage data from the first storage device, and erase the first setting information from the second storage device.

### ADVANTAGEOUS EFFECTS OF INVENTION

According to the electronic apparatus of one aspect of the present disclosure, it is possible to erase the stored data more reliably than the prior art.

### BRIEF DESCRIPTION OF DRAWINGS

Fig. 1 is a schematic diagram showing a configuration of a system 100 according to a first embodiment.
Fig. 2 is a block diagram showing a configuration of a client apparatus 1 of Fig. 1.
Fig. 3 is a block diagram showing a configuration of a UEFI controller 14A of Fig. 2.
Fig. 4 is a block diagram showing a configuration of an auxiliary controller 14B of Fig. 2.
Fig. 5 is a block diagram showing a configuration of a TPM controller 14C of Fig. 2.
Fig. 6 is a block diagram showing a configuration of a server apparatus 2 of Fig. 1.
Fig. 7 is a block diagram showing a configuration of an administrator apparatus 3 of Fig. 1.
Fig. 8 is a block diagram showing a configuration of a user terminal apparatus 4 of Fig. 1.
Fig. 9 is a schematic diagram showing functional blocks of a firmware program 50 executed by a processing circuit 401 of Fig. 3, and an erasure application program 70 executed by a processor 11 of Fig. 2.
Fig. 10 is a flowchart showing a registration process of the erasure application program 70 executed by the processor 11 of Fig. 2.
Fig. 11 is a flowchart showing a registration process of the server apparatus 2 executed by a processor 21 of Fig. 6.
Fig. 12 is a diagram showing exemplary contents of a management table 22a stored in a RAM 22 of Fig. 6.
Fig. 13 is a diagram showing exemplary contents of an erasure flag in the management table 22a of Fig. 12.
Fig. 14 is a diagram showing further exemplary contents of the erasure flag in the management table 22a of Fig. 12.
Fig. 15 is a flowchart showing an erasure process of the erasure application program 70 executed by the processor 11 of Fig. 2.
Fig. 16 is a flowchart showing an erasure process of the firmware program 50 executed by the processing circuit 401 of Fig. 3.
Fig. 17 is a flowchart showing an erasure process of the server apparatus 2 executed by the processor 21 of Fig. 6.
Fig. 18 is a diagram showing contents displayed on a display device 16 of the client apparatus 1 in step S39 of Fig. 16.
Fig. 19 is a sequence diagram showing operations of the system 100 of Fig. 1, in a case where erasure result information has been successfully transmitted via a communication line 6 in the system 100.
Fig. 20 is a sequence diagram showing operations of the system 100 of Fig. 1, in a case where the transmission of the erasure result information via the communication line 6 has failed in the system 100.
Fig. 21 is a flowchart showing operations of a system according to a second embodiment, including an erasure and verification process of the firmware program 50 executed by the processing circuit 401 of the client apparatus 1.
Fig. 22 is a flowchart showing a subroutine of step S70 (verification process) of Fig. 21.
Fig. 23 is a flowchart showing operations of a system according to a second embodiment, including an erasure and verification process of the server apparatus 2 executed by the processor 21.
Fig. 24 is a schematic diagram for explaining a first verification method of a storage device 13.
Fig. 25 is a schematic diagram for explaining a second verification method of the storage device 13.
Fig. 26 is a sequence diagram showing operations of the system 100 according to the second embodiment, in a case where erasure result information and verification result information have been successfully transmitted via the communication line 6.
Fig. 27 is a sequence diagram showing operations of the system 100 according to the second embodiment, in a case where the transmission of the erasure result information and the verification result information via the communication line 6 has failed.
Fig. 28 is a flowchart showing operations of a system according to a modification of the second embodiment, including a subroutine of step S70A (verification process) executed by the processing circuit 401 of the client apparatus 1.
Fig. 29 is a flowchart showing operations of the system according to the modification of the second embodiment, including an erasure and verification process of the server apparatus 2 executed by the processor 21.

### DESCRIPTION OF EMBODIMENTS

Hereinafter, embodiments will be described in detail with reference to the drawings as appropriate. However, excessively detailed explanation may be omitted. For example, detailed explanation of well-known matters may be omitted, and redundant explanations on substantially the same configuration may be omitted. This is to avoid the unnecessary redundancy of the following description, and to facilitate understanding by those skilled in the art.

It is to be noted that the inventor(s) intends to provide the accompanying drawings and the following description so that those skilled in the art can sufficiently understand the present disclosure, and does not intend to limit subject matters recited in the claims.

### [FIRST EMBODIMENT]

### [CONFIGURATION OF FIRST EMBODIMENT]

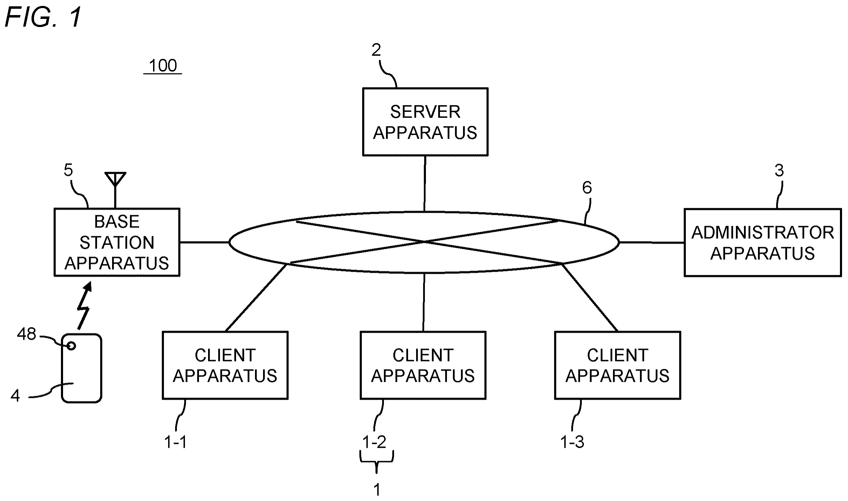

Fig. 1 is a schematic diagram showing a configuration of a system 100 according to a first embodiment. The system 100 of Fig. 1 includes a plurality of client apparatuses 1-1 to 1-3, a server apparatus 2, an administrator apparatus 3, a user terminal apparatus 4, a base station apparatus 5, and a communication line 6.

The client apparatuses 1-1 to 1-3 are communicably connected to the server apparatus 2 via the communication line 6. Each of the client apparatuses 1-1 to 1-3 is, for example, an electronic apparatus provided with a storage device (described later), such as a personal computer or a mobile phone.

In the present description, the client apparatuses 1-1 to 1-3 are also collectively referred to as "client apparatuses 1".

The server apparatus 2 manages erasure of data stored in the storage devices of the client apparatuses 1.

The administrator apparatus 3 is communicably connected to the server apparatus 2 via the communication line 6. An administrator of the client apparatuses 1 accesses the server apparatus 2 using the administrator apparatus 3, and designates a storage device from which stored data is to be erased.

The user terminal apparatus 4 is electronic equipment provided with a camera 48 and a communication device, for example, a mobile phone. The user terminal apparatus 4 is communicably connected to the server apparatus 2 via the base station apparatus 5.

The communication line 6 is, for example, a local area network (LAN), the Internet, or a combination thereof.

For example, the client apparatuses 1 and the administrator apparatus 3 may be owned by an organization, such as a company, and on the other hand, the server apparatus 2 may be operated by a third party different from this organization. In this case, the organization that owns the client apparatuses 1 and the administrator apparatus 3 makes an agreement with a business operator of the server apparatus 2, for managing erasure of data stored in the storage devices of the client apparatuses 1, and becomes a customer of the business operator.

In the present description, "erasure" means making stored original data unreadable. "erasure" may mean, for example, making original data unreadable by overwriting the original data with other data, such as "0", "1", random values, or the like, or by executing a command erasure function (for example, a secure erase command) incorporated in a firmware program of a storage device. In addition, in a case where the storage device has a self-encrypting function, "erasure" may mean changing an encryption key (cryptographic erasure).

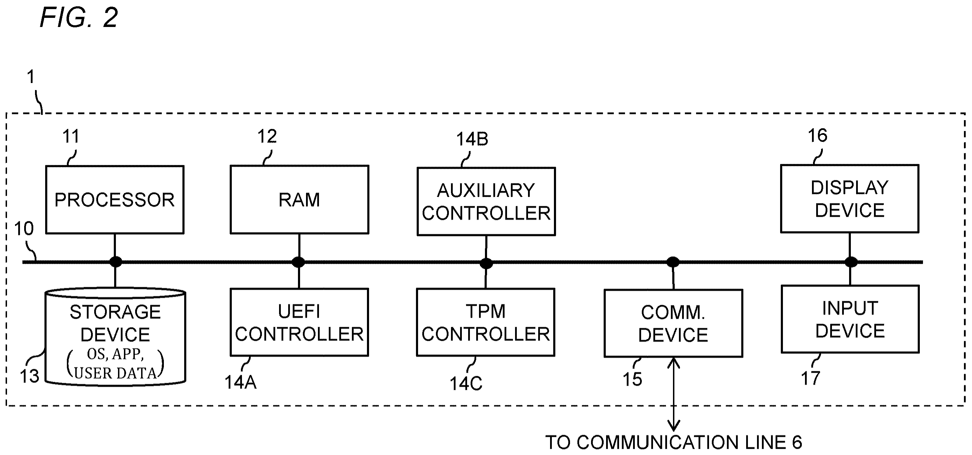

Fig. 2 is a block diagram showing a configuration of the client apparatus 1 of Fig. 1. The client apparatus 1 is provided with a bus 10, a processor 11, a random access memory (RAM) 12, a storage device 13, a unified extensible firmware interface (UEFI) controller 14A, an auxiliary controller 14B, a trusted platform module (TPM) controller 14C, a communication device 15, a display device 16, and an input device 17. The processor 11 controls entire operations of the client apparatus 1. The RAM 12 temporarily stores programs and data necessary for the operations of the client apparatus 1. The storage device 13 stores storage data including an operating system (OS), application programs (APP), and user data. The storage device 13 is a nonvolatile storage medium, such as a hard disk drive (HDD) or a solid state drive (SSD). The UEFI controller 14A controls the operations of the client apparatus 1, and for example, erases the data stored in the storage device 13. The auxiliary controller 14B enables an external apparatus connected via the communication line 6 to control the operations of the client apparatus 1. The TPM controller 14C encrypts and decrypts data stored in the storage device 13, and records an encryption key. The communication device 15 is communicably connected to the server apparatus 2 via the communication line 6. The display device 16 displays information related to the status of the client apparatus 1, and for example, displays an image including information related to erasure of data stored in the storage device 13. The input device 17 receives user inputs for controlling the operations of the client apparatus 1, for example, user inputs related to erasure of the data stored in the storage device 13. The input device 17 includes, for example, a keyboard and a pointing device. The processor 11, the RAM 12, the storage device 13, the UEFI controller 14A, the auxiliary controller 14B, the TPM controller 14C, the communication device 15, the display device 16, and the input device 17 are connected to each other via the bus 10.

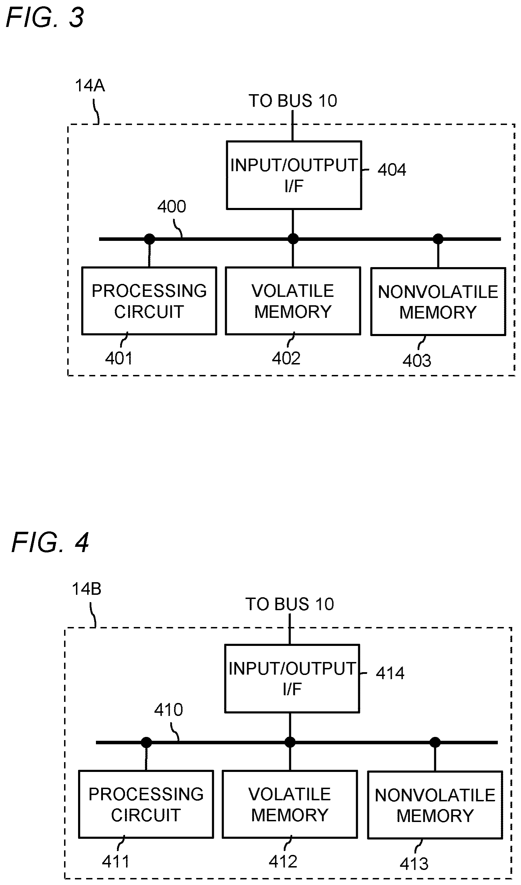

Fig. 3 is a block diagram showing a configuration of the UEFI controller 14A of Fig. 2. The UEFI controller 14A is provided with a bus 400, a processing circuit 401, a volatile memory 402, a nonvolatile memory 403, and an input/output interface (I/F) 404. The processing circuit 401 controls entire operations of the UEFI controller 14A. The volatile memory 402 temporarily stores programs and data necessary for the operations of the UEFI controller 14A. The nonvolatile memory 403 stores a firmware program of the UEFI controller 14A and setting information thereof. The firmware program of the UEFI controller 14A is executed by the processing circuit 401 to control the operations of the client apparatus 1 based on the setting information. The setting information includes, for example, a password (supervisor password) that restricts the change of the setting information. The processing circuit 401, the volatile memory 402, the nonvolatile memory 403, and the input/output interface 404 are connected to each other via the bus 400. The bus 400 is connected to the bus 10 of the client apparatus 1 (see Fig. 2) via the input/output interface 404.

Fig. 4 is a block diagram showing a configuration of the auxiliary controller 14B of Fig. 2. The auxiliary controller 14B is provided with a bus 410, a processing circuit 411, a volatile memory 412, a nonvolatile memory 413, and an input/output interface 414. The processing circuit 411 controls entire operations of the auxiliary controller 14B. The volatile memory 412 temporarily stores programs and data necessary for the operations of the auxiliary controller 14B. The nonvolatile memory 413 stores a firmware program of the auxiliary controller 14B and setting information thereof. The firmware program of the auxiliary controller 14B is executed by the processing circuit 411 to enable, based on the setting information, an external apparatus connected via the communication line 6 to control the operations of the client apparatus 1. The setting information includes, for example, whether or not to activate control by the external apparatus. The processing circuit 411, the volatile memory 412, the nonvolatile memory 413, and the input/output interface 414 are connected to each other via the bus 410. The bus 410 is connected to the bus 10 of the client apparatus 1 (see Fig. 2) via the input/output interface 414.

The firmware program of the auxiliary controller 14B may be, for example, Intel (registered trademark) Management Engine BIOS Extension (MEBx) provided by Intel Corporation. Along with Intel Advanced Management Technology (AMT) and Intel AMT High Level Application Programming Interface (HLAPI) provided by Intel Corporation, MEBx enable eternal remote access even when the operating system is not available, or when the apparatus is powered off.

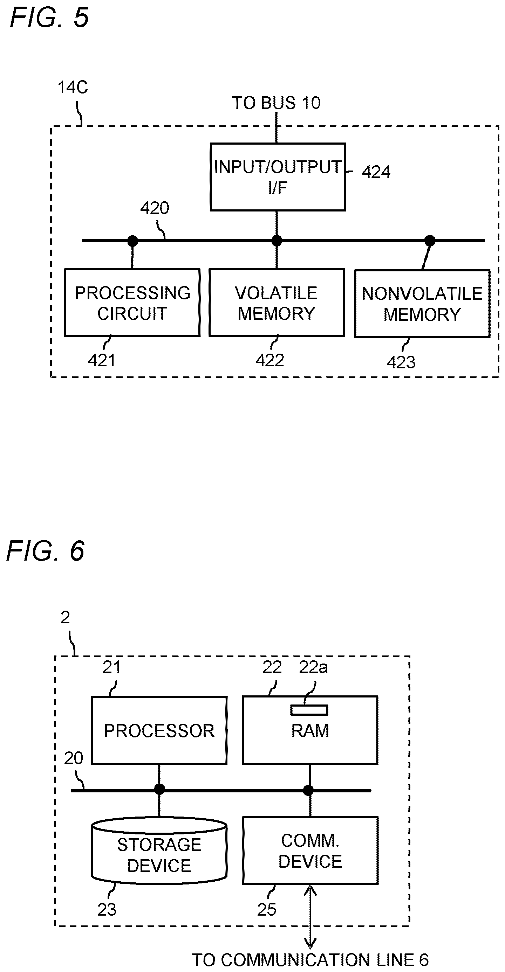

Fig. 5 is a block diagram showing a configuration of the TPM controller 14C of Fig. 2. The TPM controller 14C is provided with a bus 420, a processing circuit 421, a volatile memory 422, a nonvolatile memory 423, and an input/output interface 424. The processing circuit 421 controls entire operations of the TPM controller 14C. The volatile memory 422 temporarily stores programs and data necessary for the operations of the TPM controller 14C. The nonvolatile memory 423 stores a firmware program of the TPM controller 14C and setting information thereof. The firmware program of the TPM controller 14C is executed by the processing circuit 421 to encrypt and decrypt the data stored in the storage device 13 based on the setting information. The setting information includes, for example, the encryption key. The processing circuit 421, the volatile memory 422, the nonvolatile memory 423, and the input/output interface 424 are connected to each other via the bus 420. The bus 420 is connected to the bus 10 of the client apparatus 1 (see Fig. 2) via the input/output interface 424.

When the firmware program of the UEFI controller 14A according to the embodiment is executed by the processing circuit 401, the firmware program erases the storage data from the storage device 13, erases the setting information of the UEFI controller 14A from the nonvolatile memory 403, erases the setting information of the auxiliary controller 14B from the nonvolatile memory 413, and erases the setting information of the TPM controller 14C from the nonvolatile memory 423.

Fig. 6 is a block diagram showing a configuration of the server apparatus 2 of Fig. 1. The server apparatus 2 is provided with a bus 20, a processor 21, a RAM 22, a storage device 23, and a communication device 25. The processor 21 controls entire operations of the server apparatus 2, and manages erasure of the storage data and the setting information of the client apparatuses 1. The RAM 22 temporarily stores programs and data necessary for the operations of the server apparatus 2. For example, the RAM 22 stores a management table 22a for managing the erasure of the storage data and the setting information of the client apparatuses 1. The storage device 23 is a nonvolatile storage medium that stores the programs necessary for the operations of the server apparatus 2. The communication device 25 is communicably connected to the client apparatuses 1 and the administrator apparatus 3 via the communication line 6. The processor 21, the RAM 22, the storage device 23, and the communication device 25 are connected to each other via the bus 20.

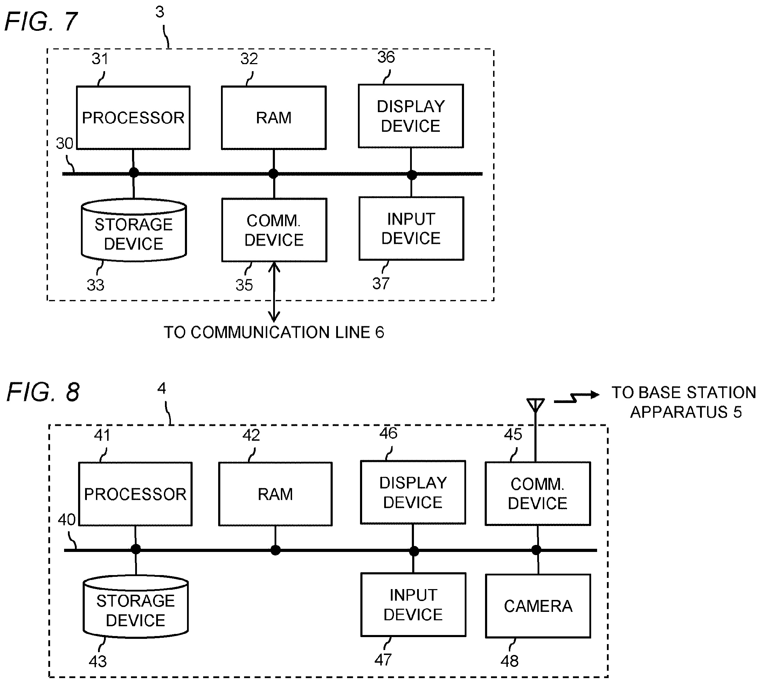

Fig. 7 is a block diagram showing a configuration of the administrator apparatus 3 of Fig. 1. The administrator apparatus 3 is provided with a bus 30, a processor 31, a RAM 32, a storage device 33, a communication device 35, a display device 36, and an input device 37. The processor 31 controls entire operations of the administrator apparatus 3. The RAM 32 temporarily stores programs and data necessary for the operations of the administrator apparatus 3. The storage device 33 is a nonvolatile storage medium that stores the programs necessary for the operations of the administrator apparatus 3. The communication device 35 is communicably connected to the server apparatus 2 via the communication line 6. The display device 36 displays information related to the status of the administrator apparatus 3. The input device 37 receives user inputs for controlling the operations of the administrator apparatus 3. The input device 37 includes, for example, a keyboard and a pointing device. The processor 31, the RAM 32, the storage device 33, the communication device 35, the display device 36, and the input device 37 are connected to each other via the bus 30.

The server apparatus 2 provides an interface accessible by the administrator apparatus 3, for example, a web-based interface, in order to manage erasure of data stored in the storage devices of the client apparatuses 1. In this case, the server apparatus 2 executes an application program of a web server, and the administrator apparatus 3 executes an application program of a web browser to access the web server of the server apparatus 2.

Fig. 8 is a block diagram showing a configuration of the user terminal apparatus 4 of Fig. 1. The user terminal apparatus 4 is provided with a bus 40, a processor 41, a RAM 42, a storage device 43, a communication device 45, a display device 46, an input device 47, and a camera 48. The processor 41 controls entire operations of the user terminal apparatus 4. The RAM 42 temporarily stores programs and data necessary for the operations of the user terminal apparatus 4. The storage device 43 is a nonvolatile storage medium that stores the programs necessary for the operations of the user terminal apparatus 4. The communication device 45 is communicably connected to the server apparatus 2 via the base station apparatus 5. The display device 46 displays information related to the status of the user terminal apparatus 4. The input device 47 receives user inputs for controlling the operations of the user terminal apparatus 4. The input device 47 includes, for example, a switch and a touch panel. The camera 48 captures, for example, an image displayed on the display device 16 of the client apparatus 1. As will be described later, an image (for example, a two-dimensional (2D) barcode) including information related to the erasure of the storage data and the setting information of the client apparatus 1 may be displayed on the display device 16 of the client apparatus 1. In this case, the user terminal apparatus 4 transmits the contents of the captured image to the server apparatus 2 via the base station apparatus 5. The processor 41, the RAM 42, the storage device 43, the communication device 45, the display device 46, and the input device 47 and the camera 48 are connected to each other via the bus 40.

### [OPERATIONS OF FIRST EMBODIMENT]

In a case of reusing the client apparatus 1 after erasing data stored in the storage device 13, various disadvantages may occur if old setting information of the UEFI controller 14A, the auxiliary controller 14B, and the TPM controller 14C remains not being erased. For example, in a case where the setting information of the UEFI controller 14A includes, in particular, the supervisor password being set, it is not possible to change the setting information of the UEFI controller 14A, and also not possible to reset the supervisor password itself. In addition, in a case where the setting information of the auxiliary controller 14B includes, in particular, an activated control by an external apparatus, the client apparatus 1 may be remotely operated by a third party. In addition, in a case where the setting information of the TPM controller 14C remains not being erased, the encryption key may be leaked. Conventionally, the setting information of the UEFI controller 14A, the auxiliary controller 14B, and the TPM controller 14C can not be erased by existing erasure programs, and the administrator needs to manually and directly erase the setting information, separately from the data stored in the storage device 13. Therefore, it is required to erase the data stored in the storage device 13, and also erase the setting information of the UEFI controller 14A, the auxiliary controller 14B, and the TPM controller 14C.

As described above, in the client apparatus 1, the storage device 13 stores the operating system and application programs, the nonvolatile memory 403 stores the firmware program of the UEFI controller 14A, the nonvolatile memory 413 stores the firmware program of the auxiliary controller 14B, and the nonvolatile memory 423 stores the firmware program of the TPM controller 14C. The operating system and the application programs are executed by the processor 11. The firmware program of the UEFI controller 14A is executed by the processing circuit 401, the firmware program of the auxiliary controller 14B is executed by the processing circuit 411, and the firmware program of the TPM controller 14C is executed by the processing circuit 421. In general, when booting the client apparatus 1, at first, the firmware program of the UEFI controller 14A is executed, and then, the firmware program loads the operating system. The application programs are executed on the operating system. The application programs access hardware devices of the client apparatus 1 (storage device 13, communication device 15, display device 16, and input device 17) via the operating system. One of the application programs is an erasure application program for erasing data stored in the storage device 13. On the other hand, the firmware programs of the UEFI controller 14A, the auxiliary controller 14B, and the TPM controller 14C directly access the hardware devices of the client apparatus 1, not via the operating system. The client apparatus 1 is configured to execute the erase application program and the firmware program of the UEFI controller 14A to erase the data stored in the storage device 13, erase the setting information of the UEFI controller 14A stored in the nonvolatile memory 403, erase the setting information of the auxiliary controller 14B stored in the nonvolatile memory 413, and erase the setting information of the TPM controller 14C stored in the nonvolatile memory 423.

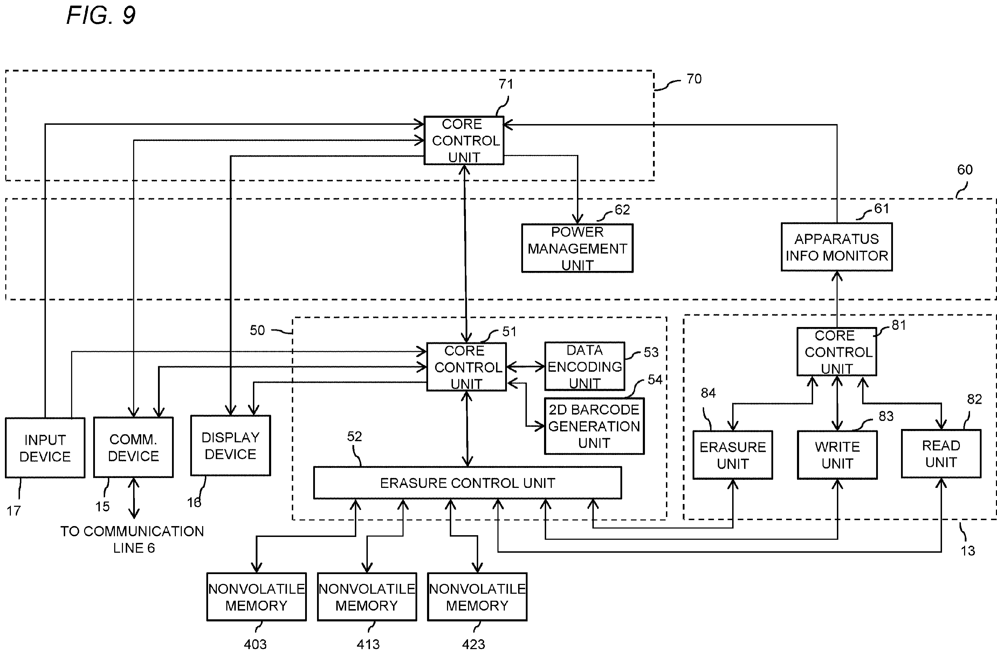

Fig. 9 is a schematic diagram showing functional blocks of a firmware program 50 executed by the processing circuit 401 of Fig. 3, and an erasure application program 70 executed by the processor 11 of Fig. 2.

The firmware program 50 of the UEFI controller 14A includes, as functional blocks thereof, for example, a core control unit 51, an erasure control unit 52, a data encoding unit 53, and a two-dimensional barcode generation unit 54. The core control unit 51 controls the other functional blocks of the firmware program 50, controls data inputs and outputs among the functional blocks, and controls data inputs and outputs external to the firmware program 50. The erasure control unit 52 controls erasure of the data stored in the storage device 13, the setting information of the UEFI controller 14A stored in the nonvolatile memory 403, the setting information of the auxiliary controller 14B stored in the nonvolatile memory 413, and/or the setting information of the TPM controller 14C stored in the nonvolatile memory 423. The data encoding unit 53 encodes erasure result information using a predetermined encoding method, the erasure result information indicating whether or not the storage data and the setting information have been successfully erased. The two-dimensional barcode generation unit 54 generates a two-dimensional barcode including the erasure result information indicating whether or not the storage data and the setting information have been successfully erased (including erasure completion information when the data has been successfully erased).

An operating system 60 provides an interface for the hardware devices of the client apparatus 1 (storage device 13, communication device 15, display device 16, and input device 17) to the erasure application program 70 and the other application programs (not shown). The operating system 60 includes, as functional blocks thereof, for example, an apparatus information monitor 61 and a power management unit 62. The apparatus information monitor 61 obtains information of the client apparatus 1 from the client apparatus 1, and obtains information of various components of the client apparatus 1 from the components. The example of Fig. 9 shows a case where the apparatus information monitor 61 obtains information of the storage device 13 of the client apparatus 1. The information of the client apparatus 1 includes, for example, a manufacturer, a model, a serial number, and a universally unique identifier (UUID) of the client apparatus 1. The information of the storage device 13 includes, for example, a manufacturer, a model, a serial number, a UUID, and capacity of the storage device 13. The power management unit 62 controls halt, suspend, hibernate, and reboot of the client apparatus 1.

The storage devices 13 of the client apparatuses 1 under the management of one server apparatus 2 can be identified from each other, using at least some of the manufacturer of the client apparatus 1, the model of the client apparatus 1, the serial number of the client apparatus 1, the UUID of the client apparatus 1, the manufacturer of the storage device 13, the model of the storage device 13, the serial number of the storage device 13, the UUID of the storage device 13, and the capacity of the storage device 13. Therefore, at least some of the manufacturer of the client apparatus 1, the model of the client apparatus 1, the serial number of the client apparatus 1, the UUID of the client apparatus 1, the manufacturer of the storage device 13, the model of the storage device 13, the serial number of the storage device 13, the UUID of the storage device 13, and the capacity of the storage device 13 can be used as identification information for uniquely identifying the storage device 13.

The erasure application program 70 includes, for example, a core control unit 71 as a functional block thereof. The core control unit 71 controls the other functional blocks (not shown) of the erasure application program 70, controls inputs and outputs of data among the functional blocks, and controls data inputs and outputs external to the erasure application program 70.

In addition, the storage device 13 of the client apparatus 1 executes a firmware program including functional blocks shown in Fig. 9. The storage device 13 includes, as functional blocks thereof, for example, a core control unit 81, a read unit 82, a write unit 83, and an erasure unit 84. The core control unit 81 controls the other functional blocks of the storage device 13, and controls data inputs and outputs among the functional blocks. The read unit 82 reads data from a storage medium (not shown) of the storage device 13. The write unit 83 writes data in the storage medium of the storage device 13 (including a case of erasing original data by overwriting the original data with "0", "1", random values, or the like.). The erasure unit 84 erases data in the storage medium of the storage device 13 (including a case of erasing data by executing a secure erase command incorporated in the firmware program.).

Hereinafter, with reference to the functional blocks of Fig. 9, we will describe the operations of the client apparatus 1, and describe the operations of the server apparatus 2.

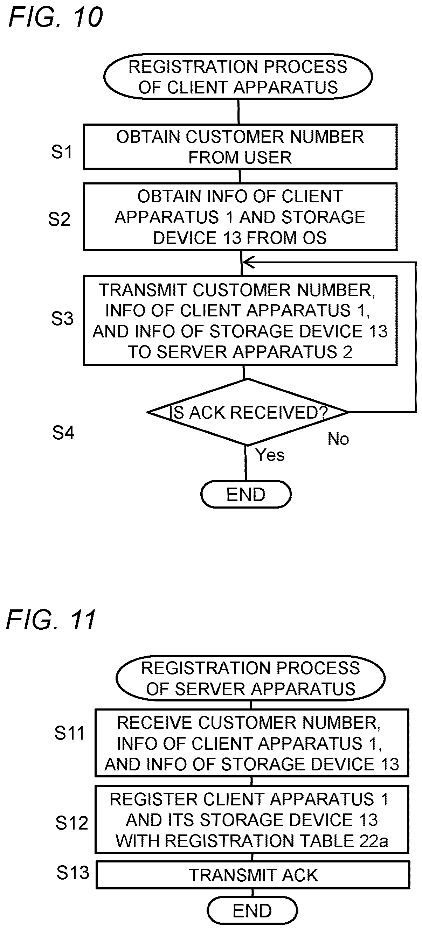

Fig. 10 is a flowchart showing a registration process of the client apparatus 1 by the erasure application program 70 executed by the processor 11 of Fig. 2. Fig. 11 is a flowchart showing a registration process of the server apparatus 2 executed by the processor 21 of Fig. 6.

In a case where the organization that owns the client apparatuses 1 is not registered with the server apparatus 2, an administrator or other staff of the organization that owns the client apparatuses 1 obtains the following information from the server apparatus 2, before the registration process of Fig. 10 is executed.
- account information of server apparatus 2 (customer ID and password)
- uniform resource locator (URL) of erasure application program 70
- customer number (serial number associated with account information and assigned for each customer)

Since the customer number is generated for each customer, that is, for each agreement for managing erasure of data stored in the storage devices of client apparatuses 1, the customer number is not identification information of the client apparatuses 1 or the storage devices 13.

Each client apparatus 1 accesses the URL of the erasure application program 70, and downloads and installs the erasure application program 70. After installation, the erasure application program 70 is started automatically or manually. After the erasure application program 70 is started, the processor 11 executes the registration process of Fig. 10 to register the storage device 13 of the client apparatus 1 with the server apparatus 2.

In step S1 of Fig. 10, the core control unit 71 of the client apparatus 1 displays a dialog box on the display device 16, the dialog box prompting to input the customer number assigned to the organization that owns the client apparatus 1. According to the dialog box, the user of the client apparatus 1 inputs the customer number using the input device 17. The core control unit 71 obtains the customer number from the user via the input device 17.

In step S2, the core control unit 71 of the client apparatus 1 obtains the information of the client apparatus 1, and the information of the storage device 13, from the apparatus information monitor 61 of the operating system 60.

In step S3, the core control unit 71 of the client apparatus 1 transmits the customer number, the information of the client apparatus 1, and the information of the storage device 13, to the server apparatus 2, using the communication device 15.

In step S11 of Fig. 11, the server apparatus 2 receives the customer number, the information of the client apparatus 1, and the information of the storage device 13. In step S12, the server apparatus 2 registers the client apparatus 1 and its storage device 13 with the management table 22a as a new target under management. When the client apparatus 1 and its storage device 13 have been registered, the server apparatus 2 transmits an acknowledgment signal (ACK) to the client apparatus 1 in step S13.

In step S4 of Fig. 10, the core control unit 71 of the client apparatus 1 determines whether or not an acknowledgment signal has been received from the server apparatus 2: if YES, the process ends; and if NO, the process returns to step S3.

By executing the registration processes of Figs. 10 and 11, the storage device 13 of the client apparatus 1 is registered with the management table 22a of the server apparatus 2 as the new target under management. According to the registration processes of Figs. 10 and 11, the user of the client apparatus 1 only needs to input the customer number using the input device 17, and the information of the client apparatus 1 and the information of the storage device 13 are automatically transmitted from the client apparatus 1 to the server apparatus 2. According to the registration processes of Figs. 10 and 11, the user of the client apparatus 1 does not need to be conscious of the organization to which the user belongs (or the organization that owns the client apparatus 1), and the server apparatus 2 automatically classifies registered storage devices 13 per customer based on the customer number.

After the storage devices 13 of the client apparatuses 1 are registered with the server apparatus 2, as necessary, the administrator of the organization that owns the client apparatuses 1 registers, with the server apparatus 2, that the data stored in the storage device 13 (storage data), the setting information of the UEFI controller 14A stored in the nonvolatile memory 403, the setting information of the auxiliary controller 14B stored in the nonvolatile memory 413, and/or the setting information of the TPM controller 14C stored in the nonvolatile memory 423 are to be erased. To this end, at first, the administrator accesses the server apparatus 2 using the administrator apparatus 3 to logs in the server apparatus 2 using the account information. Next, while browsing a list of the storage devices 13 registered with the management table 22a, the administrator sets an erasure flag to one or more storage devices 13, the erasure flag indicating that the storage data and the setting information are to be erased.

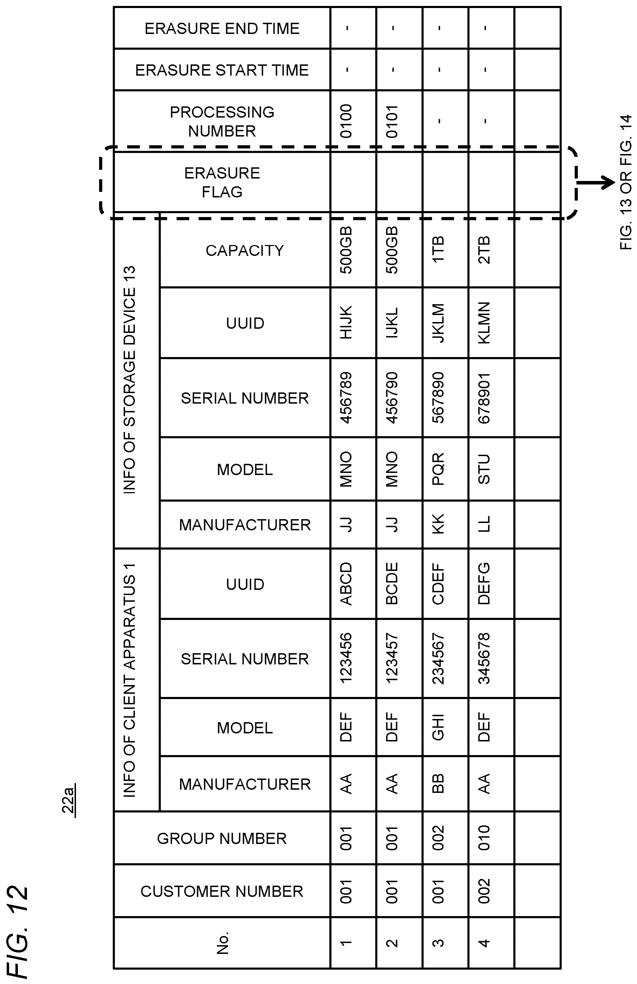

Fig. 12 is a diagram showing exemplary contents of the management table 22a stored in the RAM 22 of Fig. 6. For each client apparatus 1 or storage device 13 under management, the management table 22a includes, for example, a customer number, a group number, information of the client apparatus 1, information of the storage device 13, an erasure flag, a processing number, an erasure start time, and an erasure end time.

The customer number is assigned per customer, as described above. The group number is assigned to any sub-organization (group) that is a part of the customer's organization. For example, in a case where the customer is a company, the group may be a department or a section of the company. The information of the client apparatus 1 includes, for example, the manufacturer, the model, the serial number, and the UUID of the client apparatus 1, as described above. The information of the storage device 13 includes, for example, the manufacturer, the model, the serial number, the UUID, and capacity of the storage device 13, as described above. The erasure flag indicates that the storage data and the setting information are to be erased, as described above. The processing number is issued for each client apparatus 1 set by the erasure flag such that the storage data and the setting information are to be erased. The erasure start time indicates the time of actually starting the erasure of the data stored in the storage device 13, and the erasure end time indicates the time of actually ending the erasure of the data stored in the storage device 13.

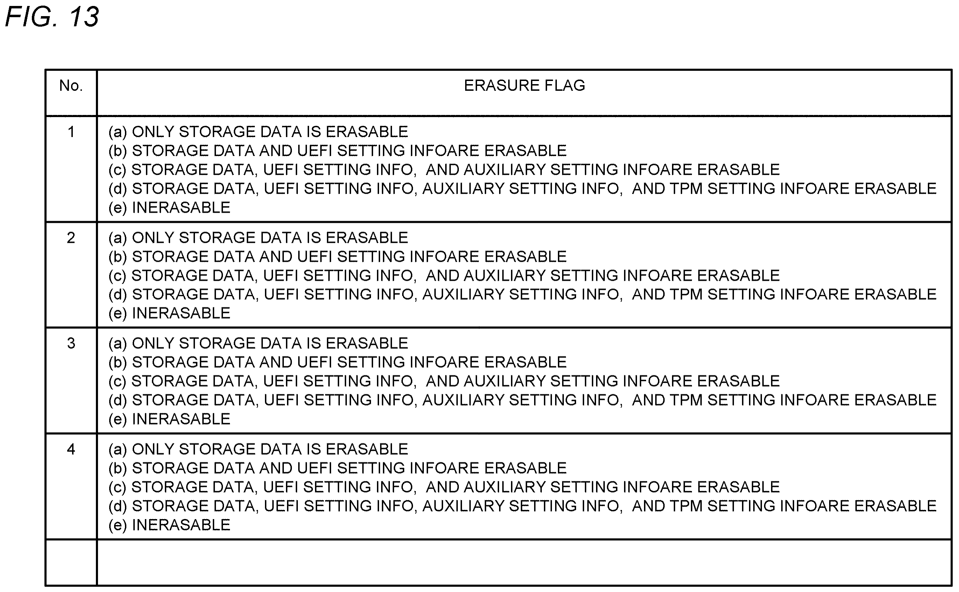

Fig. 13 is a diagram showing exemplary contents of the erasure flag in the management table 22a of Fig. 12. Per client apparatus 1 under management, the erasure flag may indicate according to which of five options (a) to (e) the storage data and the setting information are to be erased. the options including the different number of targets to be erased. The erasure flag may be set such that the number of targets to be erased gradually increases, as shown in Fig. 13.

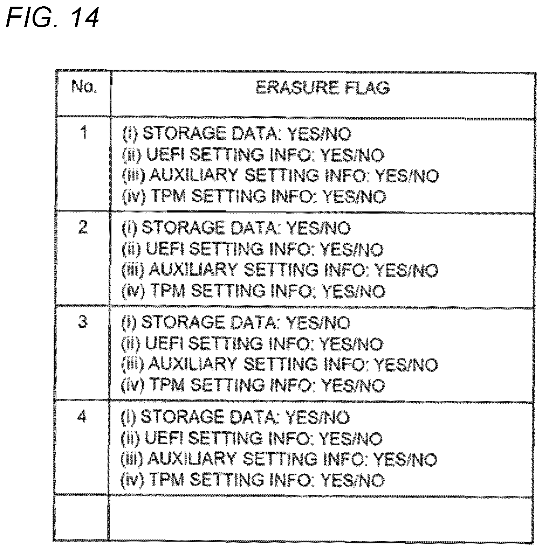

Fig. 14 is a diagram showing further exemplary contents of the erasure flag in the management table 22a of Fig. 12. The erasure flag may indicate whether or not to permit erasure for each of the storage data, the setting information of the UEFI controller 14A, the setting information of the auxiliary controller 14B, and the setting information of the TPM controller 14C.

The customer number is provided by the server apparatus 2. The group number, the information of the client apparatus 1, and the information of the storage device 13 are provided by the client apparatus 1. The erasure flag is set by the administrator of the organization that owns the client apparatuses 1, using the administrator apparatus 3. The processing number is provided by the server apparatus when the erasure flag indicating that the storage data and the setting information are to be erased is set. The erasure start time and the erasure end time are obtained when the storage data and the setting information have been actually erased.

The server apparatus 2 may generate a status report indicating statuses of the client apparatuses 1 and the storage devices 13, based on the management table 22a. For example, the status report indicates in which of the following statuses is each of the data stored in each storage device 13, the setting information of the UEFI controller 14A stored in the nonvolatile memory 403, the setting information of the auxiliary controller 14B stored in the nonvolatile memory 413, and the setting information of the TPM controller 14C stored in the nonvolatile memory 423.
- erasure flag set
- during erasure
- erasure completed
- erasure completed and erasure certificate issued
- erasure failed

The erasure certificate will be described later.

The status report may further include the following information.
- date and time of setting of erasure flag
- approver of erasure
- date and time of erasure started
- date and time of erasure completed
- erasure method
- manufacturer, model, and serial number of client apparatus 1
- manufacturer, model, serial number, and capacity of storage device 13

The administrator can access the server apparatus 2 using the administrator apparatus 3 to view the status report.

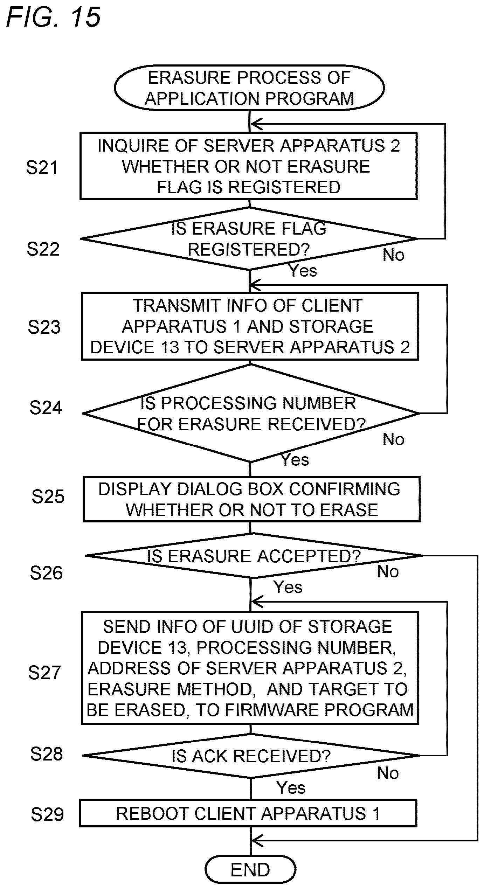

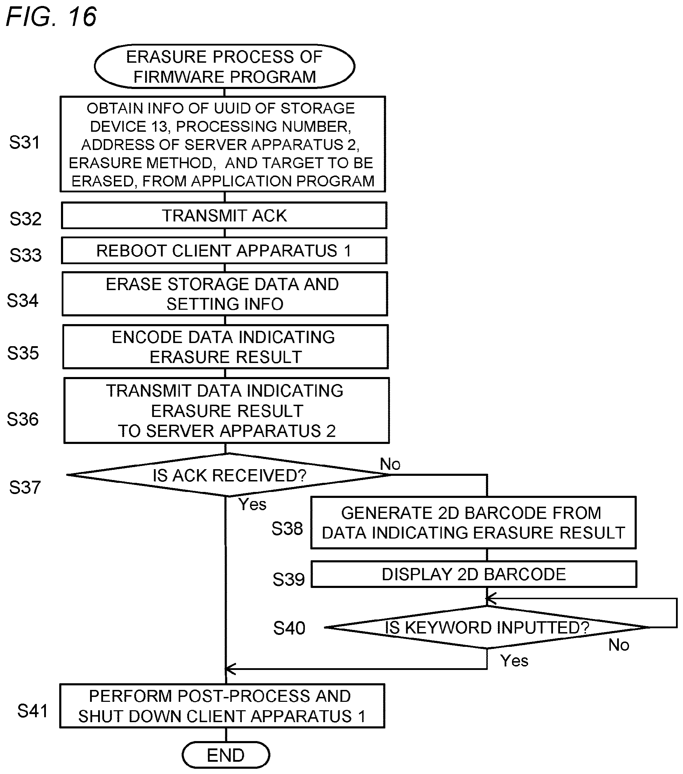

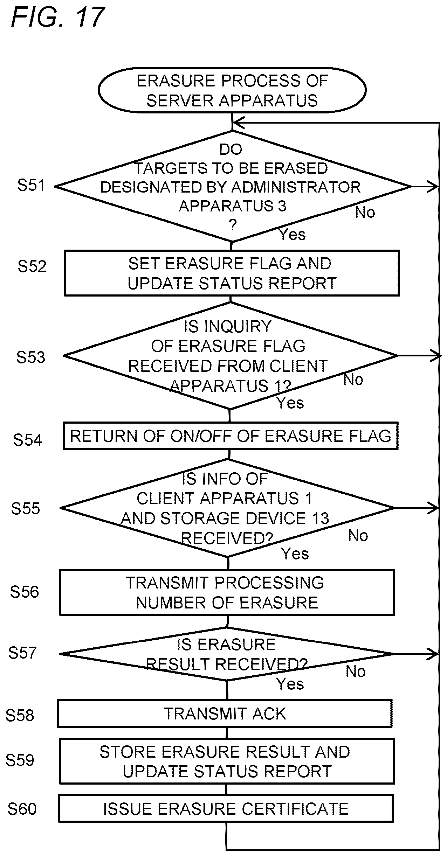

Fig. 15 is a flowchart showing an erasure process of the erasure application program 70 executed by the processor 11 of Fig. 2. Fig. 16 is a flowchart showing an erasure process of the firmware program 50 executed by the processing circuit 401 of Fig. 3. Fig. 17 is a flowchart showing an erasure process of the server apparatus 2 executed by the processor 21 of Fig. 6.

At first, in step S51 of Fig. 17, the server apparatus 2 determines whether or not the storage device 13, the nonvolatile memory 403, the nonvolatile memory 413, and/or the nonvolatile memory 423 as targets to be erased are designated by the administrator apparatus 3: if YES, the process proceeds to step S52; and if NO, the process repeats step S51. In step S52, the server apparatus 2 sets, in the management table 22a, the erasure flag for the storage device 13, the nonvolatile memory 403, the nonvolatile memory 413, and/or the nonvolatile memory 423 designated as the targets to be erased, as described with reference to Fig. 13 or 14, and updates the status report of the storage device 13.

After the client apparatus 1 is started, the erasure application program 70 is started automatically or manually.

In step S21 of Fig. 15, the core control unit 71 of the client apparatus 1 inquires of the server apparatus 2, using the communication device 15, whether or not the erasure flag for the client apparatus 1 executing the erasure process of Fig. 15 is registered with the management table 22a of the server apparatus 2.

In step S53 of Fig. 17, the server apparatus 2 determines whether or not an inquiry of the erasure flag is received from the client apparatus 1: if YES, the process proceeds to step S54; and if NO, the process returns to step S51. In step S54, the server apparatus 2 returns, to the client apparatus 1, information of targets to be erased, that is, information of ON/OFF of the erasure flag for each of the storage device 13, the nonvolatile memory 403, the nonvolatile memory 413, and the nonvolatile memory 423.

In step S22 of Fig. 15, the core control unit 71 of the client apparatus 1 determines whether or not the erasure flag for the storage device 13, the nonvolatile memory 403, the nonvolatile memory 413, and the nonvolatile memory 423 of the client apparatus 1 executing the erasure process of Fig. 15 is registered with the management table 22a of the server apparatus 2: if YES, the process proceeds to step S23; and if NO, the process returns to step S21.

In step S23, the core control unit 71 of the client apparatus 1 transmits the information of the client apparatus 1 and the information of the storage device 13 to the server apparatus 2 using the communication device 15.

In step S55 of Fig. 17, the server apparatus 2 determines whether or not the information of the client apparatus 1 and the storage device 13 has been received: if YES, the process proceeds to step S56; and if NO, the process returns to step S51.

In a case where the information of the client apparatus 1 and the information of the storage device 13 received by the server apparatus 2 are identical to the information of the client apparatus 1 and the information of the storage device 13 registered with the management table 22a by the registration process of Fig. 10, respectively, in step S56, the server apparatus 2 generates a processing number for the storage device 13 of the client apparatus 1 executing the erasure process of Fig. 15, and transmits the processing number to the client apparatus 1. In a case where the storage device 13 can not be identified based on the received information of the client apparatus 1 and the storage device 13, or in a case where the erasure flag is not set, the server apparatus 2 returns an error as a response. Even if the storage device 13 can be identified based on the received information of the client apparatus 1 and the storage device 13, in a case where the erasure flag is not set or the identification information of the storage device 13 differs, the server apparatus 2 may return a response that the identification information differs. In this case, since the processing number is not returned, the client apparatus 1 can not erase the storage data and the setting information.

In step S24 of Fig. 15, the core control unit 71 of the client apparatus 1 determines whether or not the processing number for erasure has been received in response to the information transmitted in step S23: if YES, the process proceeds to step S25; and if NO, the process returns to step S23.

In step S25, the core control unit 71 of the client apparatus 1 displays, on the display device 16, a dialog box for confirming whether to erase the storage data and the setting information. According to the dialog box, the user of the client apparatus 1 inputs whether to erase the storage data and the setting information, using the input device 17. The core control unit 71 obtains whether to erase the storage data and the setting information, via the input device 17.

In step S26, the core control unit 71 of the client apparatus 1 determines whether or not the user has accepted the erasure of the storage data and the setting information: if YES, the process proceeds to step S27; and if NO, the process ends.

In step S27, the core control unit 71 of the client apparatus 1 send, to the firmware program 50, the UUID of the storage device 13, the processing number, the address of the server apparatus 2, the erasure method, and the information of the targets to be erased. The information of the erasure method includes, for example, secure erase (an example of command erasure), three-time overwrite erasure (overwriting with any one of "0", "1", and random values), one-time overwrite erasure (overwriting with any one of "0", "1", and random values), failure, and the like.

The core control unit 51 of the firmware program 50 stores, in the nonvolatile memory 403, the UUID of the storage device 13, the processing number, the address of the server apparatus 2, the erasure method, and the information of the targets to be erased, obtained from the erasure application program 70 (see step S31 of Fig. 16). When obtaining and storing the UUID of the storage device 13, the processing number, the address of the server apparatus 2, the erasure method, and the information of the targets to be erased, the core control unit 51 sends an acknowledgment signal to the erasure application program 70 (see step S32 of Fig. 16).

In step S28 of Fig. 15, the core control unit 71 of the client apparatus 1 determines whether or not an acknowledgment signal has been received from the firmware program 50: if YES, the process proceeds to step S29; and if NO, the process returns to step S27.

In step S29, the core control unit 71 of the client apparatus 1 reboots the client apparatus 1 by sending a control signal to the power management unit 62 of the operating system 60.

Steps S31 to S33 of Fig. 16 correspond to steps S27 to S29 of Fig. 15.

In step S31 of Fig. 16, the core control unit 51 of the client apparatus 1 stores, in the nonvolatile memory 403, the UUID of the storage device 13, the processing number, the address of the server apparatus 2, the erasure method, and the information of the targets to be erased, obtained from the erasure application program 70.

In step S32, when obtaining and storing the UUID of the storage device 13, the processing number, the address of the server apparatus 2, the erasure method, and the information of the targets to be erased, the core control unit 51 of the client apparatus 1 sends an acknowledgment signal to the erasure application program 70.

In step S33, the erasure application program 70 reboots the client apparatus 1.

After the reboot, the firmware program 50 continues the erasure process of Fig. 16 without loading the operating system 60.

In step S34, the core control unit 51 of the client apparatus 1 erases all the data stored in the storage device 13, using the erasure control unit 52, according to the designated erasure method. The erasure control unit 52 may erase the data using a secure erase command of the storage device (command erasure). In addition, in step S34, the core control unit 51 of the client apparatus 1 erases, using the erasure control unit 52, the other designated targets to be erasure, that is, the setting information of the UEFI controller 14A stored in the nonvolatile memory 403, the setting information of the auxiliary controller 14B stored in the nonvolatile memory 413, and/or the setting information of the TPM controller 14C stored in the nonvolatile memory 423.

After completion of the erasure, the core control unit 51 stores, in the nonvolatile memory 403, data indicating the erasure result including the erasure start time, the erasure end time, the erasure method, and the targets to be erased.

The erasure result of the storage data may be represented, for example, as follows.
"2" ... successful erasure using secure erase command
"1" ... successful erasure using one-time overwrite erasure
"0" ... successful erasure using one-time overwrite erasure
"8" ... unsuccessful detection of storage device 13
"9" ... erasure failed

In a case of erasing the storage data and the setting information of the UEFI controller 14A (option (b) of Fig. 13), the erasure result of the setting information may be represented, for example, as follows.
"0" ... successful erasure of setting information of UEFI controller 14A
"1" ... unsuccessful erasure of setting information of UEFI controller 14A

In a case of erasing the storage data, the setting information of the UEFI controller 14A, and the setting information of the auxiliary controller 14B (option (c) of Fig. 13), the erasure result of the setting information may be represented, for example, as follows.
"0" ... successful erasure of setting information of UEFI controller 14A, and successful erasure of setting information of auxiliary controller 14B
"1" ... successful erasure of setting information of UEFI controller 14A, and unsuccessful erasure of setting information of auxiliary controller 14B
"2" ... unsuccessful erasure of setting information of UEFI controller 14A, and successful erasure of setting information of auxiliary controller 14B
"3" ... unsuccessful erasure of setting information of UEFI controller 14A, and unsuccessful erasure of setting information of auxiliary controller 14B

In a case of erasing the storage data, the setting information of the UEFI controller 14A, the setting information of the auxiliary controller 14B, and the setting information of the TPM controller 14C (option (d) of Fig. 13), the erasure result of the setting information may be represented, for example, as follows.
"0" ... successful erasure of setting information of UEFI controller 14A, successful erasure of setting information of auxiliary controller 14B, and successful erasure of setting information of TPM controller 14C
"1" ... successful erasure of setting information of UEFI controller 14A, successful erasure of setting information of auxiliary controller 14B, and unsuccessful erasure of setting information of TPM controller 14C
"2" ... successful erasure of setting information of UEFI controller 14A, unsuccessful erasure of setting information of auxiliary controller 14B, and successful erasure of setting information of TPM controller 14C
"3" ... successful erasure of setting information of UEFI controller 14A, unsuccessful erasure of setting information of auxiliary controller 14B, and unsuccessful erasure of setting information of TPM controller 14C
"4" ... unsuccessful erasure of setting information of UEFI controller 14A, successful erasure of setting information of auxiliary controller 14B, and successful erasure of setting information of TPM controller 14C
"5" ... unsuccessful erasure of setting information of UEFI controller 14A, successful erasure of setting information of auxiliary controller 14B, and unsuccessful erasure of setting information of TPM controller 14C
"6" ... unsuccessful erasure of setting information of UEFI controller 14A, unsuccessful erasure of setting information of auxiliary controller 14B, and successful erasure of setting information of TPM controller 14C
"7" ... unsuccessful erasure of setting information of UEFI controller 14A, unsuccessful erasure of setting information of auxiliary controller 14B, and unsuccessful erasure of setting information of TPM controller 14C

In step S35, the core control unit 51 of the client apparatus 1 reads the data indicating the erasure result, from the nonvolatile memory 403, and encodes the data indicating the erasure result, using the data encoding unit 53, according a predetermined encoding method. The core control unit 51 stores the encoded data in the nonvolatile memory 403.

The encoding of the encoded data indicating the erasure result is executed, for example, in the following steps.
(1) Serially arrange the UUID, the processing number, the erasure start time, the erasure end time, the erasure method, and the targets to be erased. These parameters may be arranged, for example, in a CSV format.
(2) Convert the character string related to the parameters of step (1) a half-width character string, such as BCD. Here, a character string may be added.
(3) Calculate a hash value of the character string of step (2).
(4) Convert the character string of step (2) and the hash value of step (3) into a format transmittable via the communication line 6. If necessary, perform URL encoding, for example.
(5) Transmit the data of step (4) to the address of the server apparatus 2.

In step S36, the core control unit 51 of the client apparatus 1 reads the encoded data indicating the erasure result, from the nonvolatile memory 403, and transmits the encoded data indicating the erasure result, to the server apparatus 2, using the communication device 15.

In step S57 of Fig. 17, the server apparatus 2 determines whether or not the erasure result has been received from the client apparatus 1: if YES, the process proceeds to step S58; and if NO, the process returns to step S51.

In step S58, the server apparatus 2 transmits an acknowledgment signal to the client apparatus 1 in response to the erasure result.

In step S37 of Fig. 16, the core control unit 51 of the client apparatus 1 determines whether or not an acknowledgment signal has been received from the server apparatus 2: if YES, the process proceeds to step S41; and if NO, the process proceeds to step S38.

In step S38, the core control unit 51 of the client apparatus 1 reads the data indicating the erasure result, from the nonvolatile memory 403, and generates a two-dimensional barcode from the data indicating the erasure result, using the two-dimensional barcode generation unit 54. The core control unit 51 stores the generated two-dimensional barcode in the nonvolatile memory 403.

In step S39, the core control unit 51 of the client apparatus 1 reads the two-dimensional barcode from the nonvolatile memory 403, and displays the two-dimensional barcode on the display device 16.

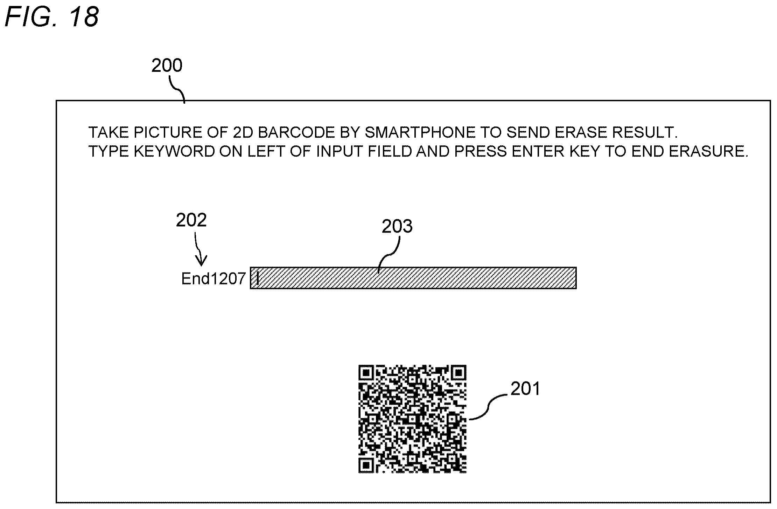

Fig. 18 is a diagram showing contents displayed on the display device 16 of the client apparatus 1 in step S39 of Fig. 16. A display screen 200 displayed on the display device 16 includes, for example, a two-dimensional barcode 201, a keyword 202, and an input field 203. The user can operate the user terminal apparatus 4 to capture the two-dimensional barcode 201 using the camera 48 of the user terminal apparatus 4, and cause the processor 41 of the user terminal apparatus 4 to decode the two-dimensional barcode 201 to extract data indicating the erasure result, and transmit the data to the server apparatus 2.

In step S40 of Fig. 16, the core control unit 51 of the client apparatus 1 determines whether or not the keyword displayed on the display device 16 has been inputted from the input device 17: if YES, the process proceeds to step S41; and if NO, the process repeats step S40. Here, the image of the two-dimensional barcode 201 may be inerasable by simple process, such as power off. For example, the core control unit 51 may display a message prompting to input a predetermined keyword 202 (in the example of Fig. 18, "End1207"), as well as the two-dimensional barcode 201, on the display device 16. When the keyword 202 is inputted into the input field 203, and Enter key is pressed, the process proceeds to step S41. When a different keyword is inputted or when the power switch is operated, the same screen is displayed again.

According to the process of Fig. 16, at first in step S36, the erasure result is transmitted from the client apparatus 1 to the server apparatus 2 via the communication line 6. In a case where a failure or the like occurs in the communication line 6, that is, in a case where an acknowledgment signal in response to the erasure result has not been received in step S37, the erasure result is transmitted to the server apparatus 2 via the user terminal apparatus 4 by executing steps S38 to S39. Therefore, in step S57 of Fig. 17, the server apparatus 2 may receive the erasure result from the client apparatus 1 via the communication line 6, or may receive the erasure result via the user terminal apparatus 4.

Referring to Fig. 17, after execution of step 58, in step S59, the server apparatus 2 stores the erasure result in the management table 22a, and updates the status report.

In step S60, the server apparatus 2 issues an erasure certificate based on the erasure result.

In step S41 of Fig. 16, the core control unit 51 of the client apparatus 1 performs a post-process, and shuts down the client apparatus 1.

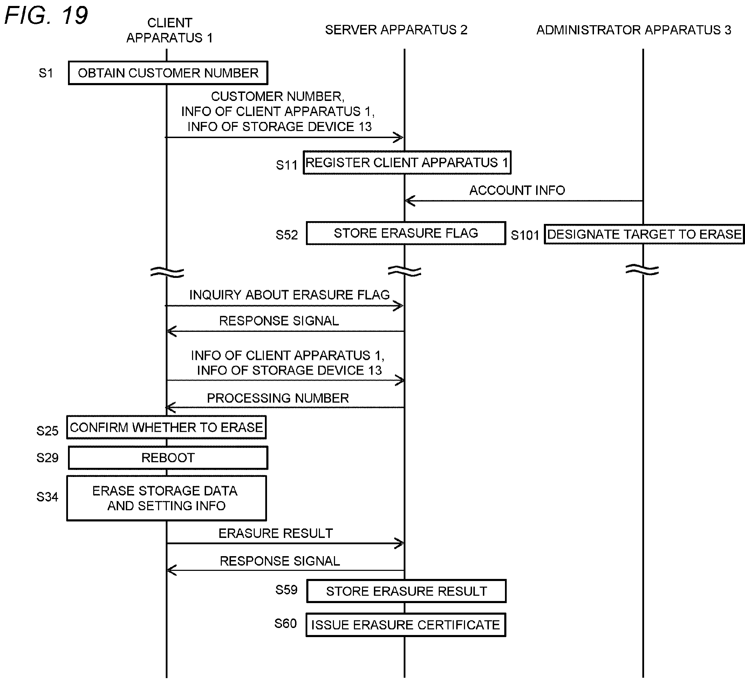

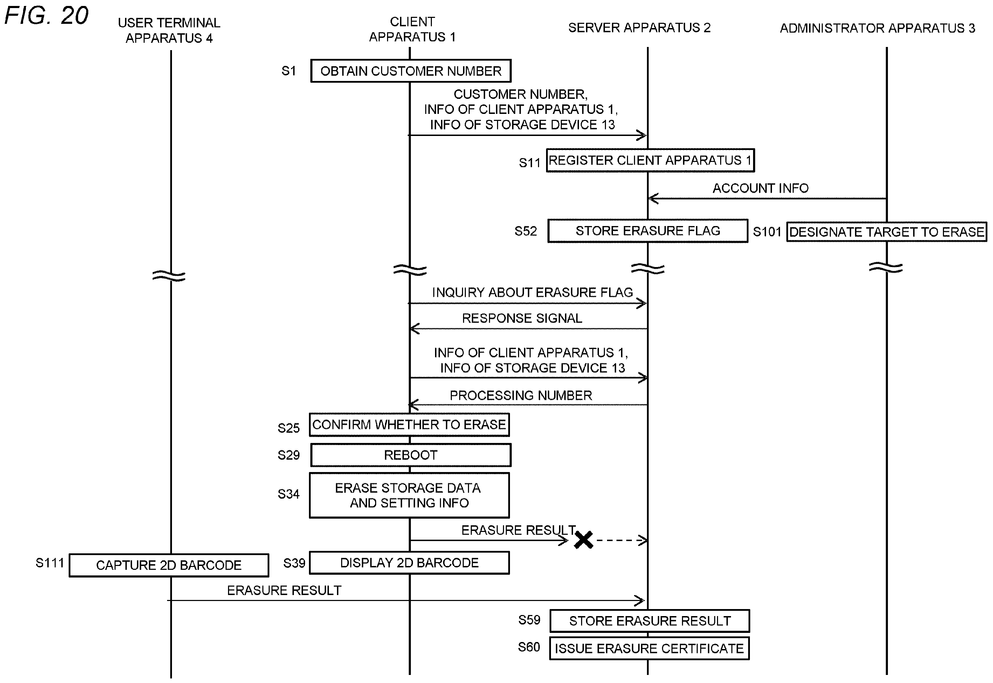

Fig. 19 is a sequence diagram showing operations of the system 100 of Fig. 1, in a case where the erasure result information has been successfully transmitted via the communication line 6 in the system 100. Fig. 20 is a sequence diagram showing operations of the system 100 of Fig. 1, in a case where the transmission of the erasure result information via the communication line 6 has failed in the system 100.

For ease of illustration, Figs. 19 and 20 show only main steps among the steps described with reference to Figs. 10, 11, and 15 to 17, and the others are omitted.

Referring to Fig. 19, in step S1, the client apparatus 1 obtains the customer number from the user. Next, the client apparatus 1 transmits the customer number, the information of the client apparatus 1, and the information of the storage device 13 to the server apparatus 2.

In step S12, the server apparatus 2 registers the storage device 13 of the client apparatus 1 as a new target under management, based on the customer number, the information of the client apparatus 1, and the information of the storage device 13.

Thereafter, the administrator apparatus 3 transmits the account information to the server apparatus 2 to log in the server apparatus 2, and in step S101, designates the storage device 13, the nonvolatile memory 403, the nonvolatile memory 413, and/or the nonvolatile memory 423 as targets to be erased.

In step S52, the server apparatus 2 stores an erasure flag in the management table 22a, the erasure flag corresponding to the storage device 13 designated in step S101.

Thereafter, the client apparatus 1 periodically inquires of the server apparatus 2 whether or not an erasure flag is set in the management table 22a, the erasure flag corresponding to the storage device 13 of the client apparatus 1. In response to the inquiry about the erasure flag, in a case where a response signal indicating that the erasure flag is set in the management table 22a is received from the server apparatus 2, the client apparatus 1 transmits the information of the client apparatus 1 and the information of the storage device 13 to the server apparatus 2. In a case where the information of the client apparatus 1 and the information of the storage device 13 received by the server apparatus 2 are identical to the information of the client apparatus 1 and the information of the storage device 13 registered with the management table 22a, the server apparatus 2 generates a processing number for the client apparatus 1, and transmits the processing number to the client apparatus 1.

Thereafter, in step S25, the client apparatus 1 displays, on the display device 16 a dialog box, for confirming whether to erase the storage data and the setting information. In a case where the user has accepted the erasure of the storage data and the setting information, the client apparatus 1 reboots in step S29. Thereafter, in step S34, the client apparatus 1 erases the storage data and the setting information.

After completion of the erasure, the client apparatus 1 transmits the erasure result information to the server apparatus 2. In a case where a response signal to the erasure result information is received from the server apparatus 2 within a predetermined timeout period, the client apparatus 1 ends the process.

In step S59, the server apparatus 2 stores the erasure result included in the erasure result signal, with the management table 22a. In step S60, the server apparatus 2 issues an erasure certificate based on the erasure result included in the erasure result signal.

On the other hand, as shown in Fig. 20, in a case where the erasure result information transmitted by the client apparatus 1 has not reached the server apparatus 2, or in a case where a response signal to the erasure result information has not been received, in step S39, the client apparatus 1 displays a two-dimensional barcode on the display device 16.

In step S111, the user of the client apparatus 1 captures the two-dimensional barcode displayed on the display device 16 of the client apparatus 1, using the user terminal apparatus 4. The processor 41 of the user terminal apparatus 4 decodes the two-dimensional barcode to extract data indicating the erasure result, and transmits the data to the server apparatus 2. Thereafter, steps S59 to S60 of Fig. 20 are similar to the corresponding steps of Fig. 19.

### [Erasure Certificate]

For example, in a case where data stored in the storage device is erased using erasure software or an erasure process authenticated by a third-party certificate authority, such as Association of Data Erase Certification (ADEC), it is possible to issue a certificate indicating that the data has been erased in a proper manner. The certificate includes, for example, the following information.
(1) Information of client apparatus 1
   - Manufacturer
   - Model
   - Serial Number
(2) Information of storage device 13
   - Manufacturer
   - Model
   - Serial Number
   - Capacity
(3) erasure information
   - information of erasure business operator (business operator ID, business operator name, and rating)
   - information of erasure software (vendor name, software name, authentication number, and erasure method)
   - date and time when erasure was executed (erasure start time and erasure end time)
   - result of erasure

As described above, the information of the client apparatus 1 and the information of the storage device 13 are transmitted from the client apparatus 1 to the server apparatus 2 by the erasure application program 70. In addition, it is necessary to submit the business operator ID, the business operator name, the vendor name, and the software name among the erasure information, to the certificate authority, in advance, for authentication. Upon the erasure software is authenticated, an authentication number is issued. In addition, the date and time when erasure was executed, and the result of erasure are transmitted from the client apparatus 1 to the server apparatus 2 by the firmware program 50. As described above, since the information necessary for issuance of the erasure certificate can be automatically transmitted from the client apparatus 1 to the server apparatus 2, it is possible to easily issue the erasure certificate.

### [CONCLUSION]

As described above, according to the system of the first embodiment, it is possible to erase the data stored in the storage device 13, and also erase the setting information of the UEFI controller 14A stored in the nonvolatile memory 403, the setting information of the auxiliary controller 14B stored in the nonvolatile memory 413, and/or the setting information of the TPM controller 14C stored in the nonvolatile memory 423. As a result, it is possible to more reliably erase the data stored in the client apparatus 1 than the prior art.

According to the system of the first embodiment, since the administrator does not need to individually and manually erase the setting information of the client apparatuses 1, it is possible to simplify management of a large number of client apparatus 1. For example, in a case where a company uses client apparatuses 1 lent by an external vendor, the client apparatuses 1 may be directly shipped to the lending vender after erasing the storage data and the setting information of the client apparatuses 1, without requiring an extra erasing procedure.

In addition, according to the system of the first embodiment, the administrator accesses the server apparatus 2 to set the erasure flag indicating that the data stored in the storage device 13 of the client apparatus 1 is to be erased, and thereafter, the client apparatus inquires of the server apparatus 2 about the presence or absence of the erasure flag, without transmitting an erasure command or the like from the server apparatus 2 to the client apparatus 1. As a result, it is possible to correctly identify and easily set the storage device 13 to be erased. No signal is transmitted from the server apparatus 2 to the client apparatus 1 when starting the erasure. The user of the client apparatus 1 may just connect the client apparatus 1 to the communication line 6 when starting the erasure. Therefore, the user can erase the data according to his/her convenience. As a result, it is possible to correctly identify and easily erase the data stored in the storage device 13.

Performing the erasure process by the combination of the erasure application program 70 and the firmware program 50, not only by the erasure application program 70, has the following advantages. The erasure application program 70 executed on the operating system 60 resides in the storage device 13. Similarly, the UEFI application program executed on the firmware program 50 resides in the storage device 13. Therefore, in a case of erasing the data stored in the storage device 13, by the erasure application program 70 or the UEFI application program, it is not possible to delete the area of the storage device 13 where the program resides. In addition, the erasure application program 70 or the UEFI application program can not communicate with the server apparatus 2 via the communication line, after completion of the data erasure. In addition, since the erasure application program 70 or the UEFI application program can not operate after completion of the data erasure, they can not obtain information indicating an erasure result (for example, the erasure start time, the erasure end time, and the erasing method). According to the system 100 of the first embodiment, by executing the firmware program 50, it is possible to erase all the data stored in the storage device 13, communicate with the server apparatus 2 via the communication line after completion of data erasure, and obtains the information indicating the erasure result after completion of data erasure.

For example, it is supposed to entrust a vendor to erase data stored in the storage device 13. However, there is a security risk in transferring, to the vendor's site, the client apparatus provided with the storage device including the stored data to be erased. Using a transfer method with high security increases costs. In addition, it is necessary to perform many operations for erasing and subsequent checking. In addition, it takes a long time, for example, half a day, to erase the data. According to the system 100 of the first embodiment, since the data stored in the storage device 13 can be erased without moving the client apparatus 1, it is possible to easily erase the data with high security and low cost.

Here, we will describe some use cases of the system according to the first embodiment.

### [Use case 1]

At first, consider a case of discarding all client apparatuses 1 corresponding to a certain group of users (for example, one section of a company), but not managing these client apparatuses 1 as a group. Each user registers a corresponding client apparatus 1 with the server apparatus 2. An administrator of the system checks all the client apparatuses 1 to be discarded (corresponding to all the members of the group), and sets erasure flags in the management table 22a of the server apparatus 2. Thereafter, each user erases the data stored in the storage device 13. The administrator confirms completion of each erasure. The confirmed one may be certified, and on the other hand, for the unconfirmed one, the administrator prompts the user to erase the data. The administrator obtains an ADEC erasure certificate as needed.

### [Use case 2]

Next, consider a case of discarding all client apparatuses 1 corresponding to a certain group of users (for example, one section of a company), and managing these client apparatuses 1 as a group. Most of an administrator's tasks are undertaken by a manager of the group (for example, Section Manager). The administrator sets a group. Each user registers a corresponding client apparatus 1 with the server apparatus 2, and sets a group which the client apparatus 1 belongs to. The manager checks all the client apparatuses 1 to be discarded (corresponding to all the members of the group), and sets erasure flags in the management table 22a of the server apparatus 2. Thereafter, each user erases the data stored in the storage device 13. The manager confirms completion of each erasure. The confirmed one may be certified, and on the other hand, for the unconfirmed one, the manager prompts the user to erase the data. The manager requests issuance of an ADEC erasure certificate. The administrator obtains the ADEC erasure certificate.

### [Use case 3]

In addition, consider a case of discarding all client apparatuses 1 corresponding to a certain group of users (for example, one section of a company), and managing these client apparatuses 1 as a group. An administrator sets a group. Each user registers a corresponding client apparatus 1 with the server apparatus 2, and sets a group which the client apparatus 1 belongs to. The manager checks all the client apparatuses 1 to be discarded (corresponding to all the members of the group), and contacts the administrator. The administrator sets erasure flags in the management table 22a of the server apparatus 2. Thereafter, each user erases the data stored in the storage device 13. The manager confirms completion of each erasure. The confirmed one may be certified, and on the other hand, for the unconfirmed one, the manager prompts the user to erase the data. The manager requests issuance of an ADEC erasure certificate. The administrator obtains the ADEC erasure certificate.

In any of Use Cases 1 to 3, it is possible to correctly identify and easily erase the data stored in the storage device 13.

### [ADVANTAGEOUS EFFECTS OF SECOND EMBODIMENT]

According to the first embodiment, a client apparatus 1 is provided with: a first processing circuit 401; a communication device 15 capable of communicating with a server apparatus 2 via a communication line 6; a first storage device 13 that stores storage data including an operating system, application programs, and user data; and a nonvolatile memory 403 that stores a first firmware program and first setting information. The first firmware program is executed by the first processing circuit 401 to control operations of the client apparatus 1 based on the first setting information. In a case where the first processing circuit 401 receives a first erasure command from the server apparatus 2, the first erasure command instructing erasure of the storage data and the first setting information, the first processing circuit 401 executes the first firmware program to erase the storage data from the first storage device 13, and erase the first setting information from the nonvolatile memory 403.

With such a configuration, it is possible to erase the data stored in the client apparatus 1, such as the setting information of the UEFI controller 14A, more reliably than the prior art.

According to the first embodiment, the first setting information may include a password for restricting change of the first setting information.

With such a configuration, it is possible to reliably erase the supervisor password of the client apparatus 1.

According to the first embodiment, after completion of the erasure of the storage data and the first setting information, the first processing circuit 401 may execute the firmware program to transmit a first result signal to the server apparatus 2, the first result signal indicating the completion of the erasure of the storage data and the first setting information.

With such a configuration, the administrator can recognize the completion of the erasure of the storage data and the first setting information.

According to the first embodiment, the client apparatus 1 may be further provided with: a second processing circuit 411; and a nonvolatile memory 413 that stores a second firmware program and second setting information. The second firmware program may be executed by the second processing circuit 411 to enable, based on the second setting information, an external apparatus connected via the communication line 6 to control operations of the client apparatus 1. In a case where the first processing circuit 401 receives a second erasure command from the server apparatus 2, the second erasure command instructing erasure of the storage data and the second setting information, the first processing circuit 401 executes the first firmware program to erase the storage data from the first storage device 13, and erase the second setting information from the nonvolatile memory 413.

With such a configuration, it is possible to erase the data stored in the client apparatus 1, such as the setting information of the auxiliary controller 14B, more reliably than the prior art.

According to the first embodiment, after completion of the erasure of the storage data and the second setting information, the first processing circuit 401 may execute the firmware program to transmit a second result signal to the server apparatus 2, the second result signal indicating the completion of the erasure of the storage data and the second setting information.

With such a configuration, the administrator can recognize the completion of the erasure of the storage data and the second setting information.

According to the first embodiment, the client apparatus 1 may be further provided with: a third processing circuit 421; and a nonvolatile memory 423 that stores a third firmware program and third setting information. The third firmware program may be executed by the third processing circuit 421 to encrypt and decrypt the storage data based on the third setting information. In a case where the first processing circuit 401 receives a third erasure command from the server apparatus 2, the third erasure command instructing erasure of the storage data and the third setting information, the first processing circuit 401 executes the first firmware program to erase the storage data from the first storage device 13, and erase the third setting information from the nonvolatile memory 423.

With such a configuration, it is possible to erase the data stored in the client apparatus 1, such as the setting information of the TPM controller 14C, more reliably than the prior art.

According to the first embodiment, after completion of the erasure of the storage data and the third setting information, the first processing circuit 401 may execute the firmware program to transmit a third result signal to the server apparatus 2, the third result signal indicating the completion of the erasure of the storage data and the third setting information.

With such a configuration, the administrator can recognize the completion of the erasure of the storage data and the third setting information.

According to the first embodiment, a system is provided with: a plurality of client apparatuses 1, each of which is the client apparatus 1; and the server apparatus 2.

With such a configuration, it is possible to erase the data stored in the client apparatus 1 more reliably than the prior art.

According to the first embodiment, the client apparatus 1 may transmit a first signal to the server apparatus 2 to register the client apparatus 1 with the server apparatus 2, the first signal including identification information for uniquely identifying the first storage device 13. The client apparatus 1 may transmit a second signal to the server apparatus 2, the second signal including the identification information of the first storage device 13, the second signal inquiring whether or not it is registered with the server apparatus 2 that data stored in the first storage device 13 is to be erased. In a case where the identification information of the first storage device 13 included in the second signal is identical to the identification information of the first storage device 13 included in the first signal, and it is registered with the server apparatus 2 that the storage data and the first setting information are to be erased, the server apparatus 2 transmits the first erasure command to the client apparatus 1.

With such a configuration, it is possible to correctly identify and easily erase the data stored in the storage device 13.

According to the first embodiment, the server apparatus 2 may obtain erasure completion information from the client apparatus 1, the erasure completion information indicating completion of the erasure of the storage data. The server apparatus 2 may issue an erasure certificate based on the erasure completion information, the erasure certificate certifying the completion of the erasure of the storage data.

With such a configuration, after erasing all the date stored in the storage device, including the operating system, it is possible to information necessary for generating the erasure certificate.

According to the first embodiment, a method of erasing data stored in a client apparatus 1 is provided. the client apparatus 1 includes: a first processing circuit 401; a communication device 15 capable of communicating with a server apparatus 2 via a communication line 6; a first storage device 13 that stores storage data including an operating system, application programs, and user data; and a nonvolatile memory 403 that stores a first firmware program and first setting information. The first firmware program is executed by the first processing circuit 401 to control operations of the client apparatus 1 based on the first setting information. In a case where the processing circuit receives a first erasure command from the server apparatus 2, the first erasure command instructing erasure of the storage data and the first setting information, the method includes executing the first firmware program by the processing circuit to erase the storage data from the first storage device 13, and erase the first setting information from the nonvolatile memory 403.

With such a configuration, it is possible to erase the data stored in the client apparatus 1 more reliably than the prior art.

### [SECOND EMBODIMENT]

After erasing data stored in a storage device of an electronic apparatus, it may be required to verify that the data has been erased. Here, similarly to a case of data erasure in which it is necessary to write fixed bit values (such as zero values) or random bit values into the entire storage area of the storage device, in general, verification of the erasure requires to read bit values of the entire storage area of the storage device. For example, in the case of erasing a 1TB SSD by three-time overwrite and verifying the erasure result, it takes about 2 hours (40 minutes × 3) for erasure, and it takes another 40 minutes for verification of the erasure. For this reason, it takes a very long time until obtaining the results of the erasure and the verification, and therefore, a user and an administrator of the electronic apparatus wait for a very long time.

A second embodiment provides an electronic apparatus and a system in which the user and the administrator do not need to wait for a very long time even when verifying erasure, and usability is less likely to degrade than the case of not verifying erasure.

### [CONFIGURATION OF SECOND EMBODIMENT]

The system according to the second embodiment is configured in a manner similar to that of the system 100 including the client apparatuses 1, the server apparatus 2, the administrator apparatus 3, the user terminal apparatus 4, and the others, according to the first embodiment described with reference to Figs. 1 to 9.

Referring to the functional block diagram of Fig. 9,
in the system according to the second embodiment, the erasure control unit 52, the data encoding unit 53, and the two-dimensional barcode generation unit 54 of the firmware program 50 are configured to perform the following operations, in addition to the operations described above. The erasure control unit 52 further controls verifying that the data stored in the storage device 13 has been erased. In addition, the data encoding unit 53 further encodes verification result information using a predetermined encoding method, the verification result information indicating whether or not it is successfully verified that the data stored in the storage device 13 has been erased. In addition, the two-dimensional barcode generation unit 54 further generates a two-dimensional barcode including the verification result information indicating whether or not it is successfully verified that the data stored in the storage device 13 has been erased (in a case of successful verification, including verification completion information).

Hereinafter, we will describe operations of the client apparatus 1, the server apparatus 2, the administrator apparatus 3, and the user terminal apparatus 4.

### [OPERATIONS OF SECOND EMBODIMENT]

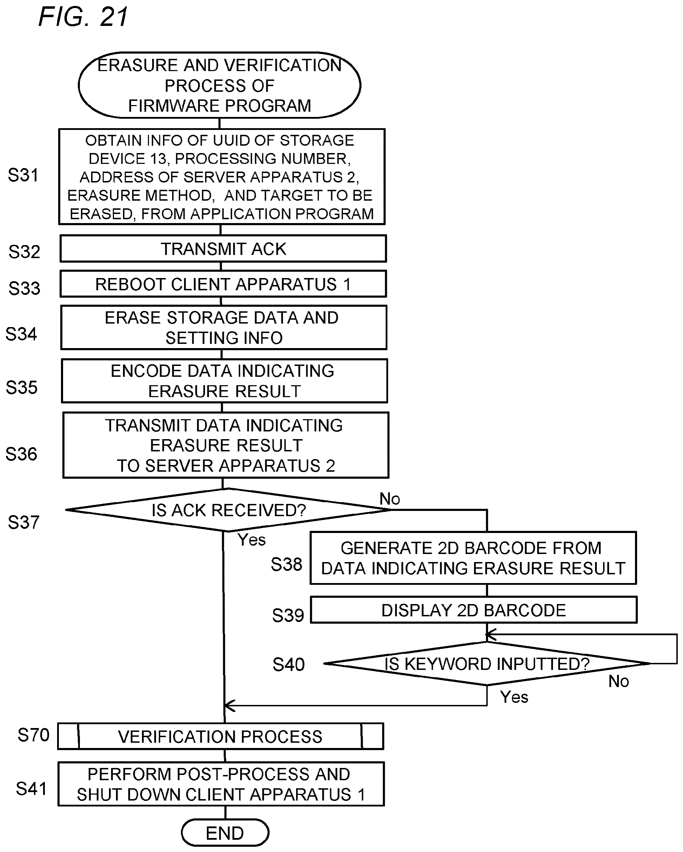

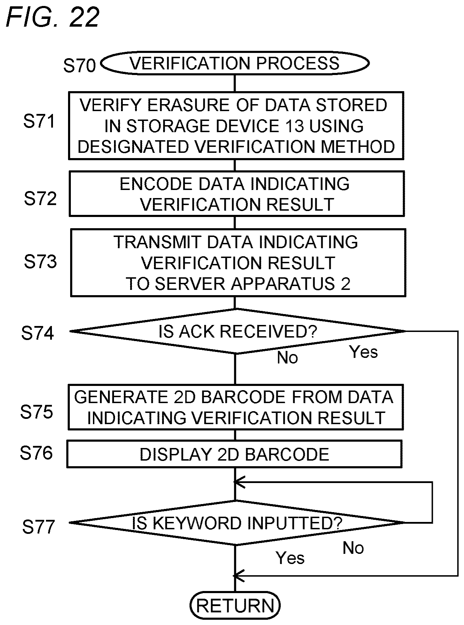

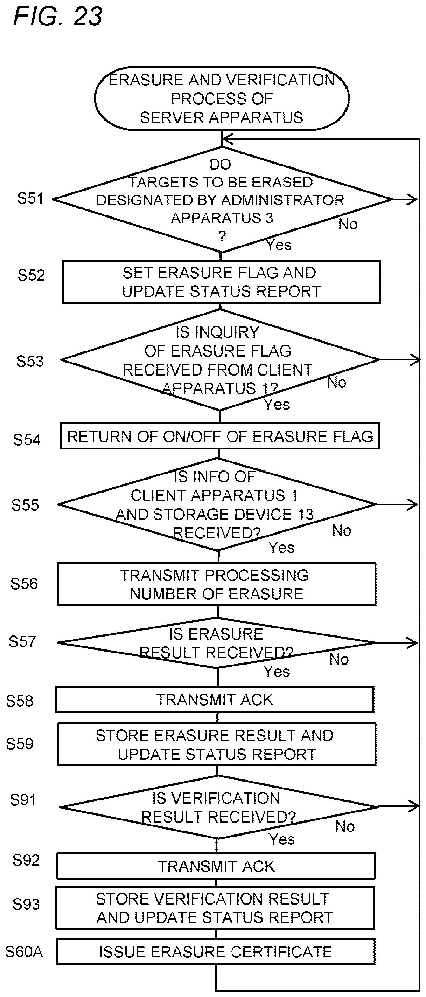

Fig. 21 is a flowchart showing operations of the system according to the second embodiment, including an erasure and verification process of the firmware program 50 executed by the processing circuit 401 of the client apparatus 1. Fig. 22 is a flowchart showing a subroutine of step S70 (verification process) of Fig. 21. Fig. 23 is a flowchart showing operations of the system according to a second embodiment, including an erasure and verification process of the server apparatus 2 executed by the processor 21.

The process of Fig. 21 includes a verification process of step S70 in addition to steps of Fig. 16, where it is verified that the data stored in the storage device 13 has been erased. In addition, the process of Fig. 23 further includes steps S91 to S93 in addition to steps of Fig. 17.

In a case where step S37 of Fig. 21 is YES, or step S40 is YES, the core control unit 51 of the client apparatus 1 proceeds to the verification process of step S70.

In step S71 of Fig. 22, the core control unit 51 of the client apparatus 1 verifies that the data stored in the storage device 13 has been erased, using the erasure control unit 52, according to a designated verification method. For example, in a case of erasing the data by writing zero values in the storage area of the storage device 13, the erasure may be verified by reading bit values in the storage area of the storage device 13, and checking that each bit is a zero value. After completion of the verification, the core control unit 51 stores data indicating the verification result, in the nonvolatile memory 403.

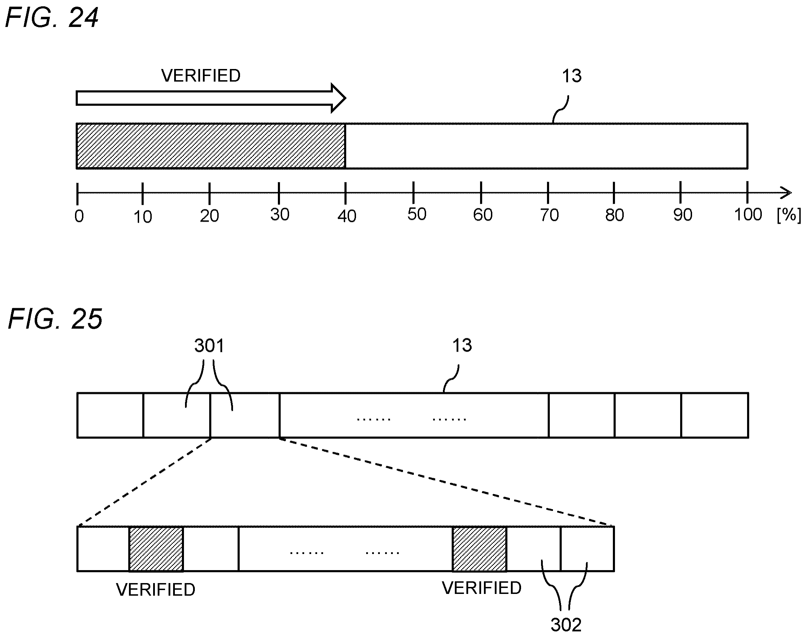

Fig. 24 is a schematic diagram for explaining a first verification method for the storage device 13. The erasure may be verified by reading and checking bit values of the entire storage area of the storage device 13.

Fig. 25 is a schematic diagram for explaining a second verification method for the storage device 13. The erasure may be verified by reading and checking bit values of a predetermined number of partial areas, the partial areas being randomly extracted from a plurality of partial areas divided from the entire storage area of the storage device 13. In the example of Fig. 25, the entire storage area of the storage device 13 includes a plurality of (for example, 1000) intermediate areas 301, and each of the intermediate areas 301 includes a plurality of (for example, 20) small areas 302. The erasure may be verified by reading and checking bit values of at least some (for example, randomly-extracted-two) of the small areas 302 in each of the intermediate areas 301.

In step S72 of Fig. 22, the core control unit 51 of the client apparatus 1 reads the data indicating the verification result, from the nonvolatile memory 403, and encodes the data indicating the verification result, using the data encoding unit 53, according to a predetermined encoding method. The core control unit 51 stores the encoded data in the nonvolatile memory 403.

In step S73, the core control unit 51 of the client apparatus 1 reads the encoded data indicating the verification result, from the nonvolatile memory 403, and transmits the encoded data indicating the verification result, to the server apparatus 2, using a communication device 15.

In step S91 of Fig. 23, the server apparatus 2 determines whether or not a verification result has been received from the client apparatus 1: if YES, the process proceeds to step S92; and if NO, the process returns to step S51.

In step S92, the server apparatus 2 transmits an acknowledgment signal to the client apparatus 1 in response to the verification result.

In step S74 of Fig. 22, the core control unit 51 of the client apparatus 1 determines whether or not an acknowledgment signal has been received from the server apparatus 2: if YES, the process proceeds to step S41 of Fig. 21; and if NO, the process proceeds to step S75 of Fig. 22.

In step S75, the core control unit 51 of the client apparatus 1 reads the data indicating the verification result, from the nonvolatile memory 403, and generates a two-dimensional barcode from the data indicating the verification result, using the two-dimensional barcode generation unit 54. The core control unit 51 stores the generated two-dimensional barcode in the nonvolatile memory 403.

In step S76, the core control unit 51 of the client apparatus 1 reads the two-dimensional barcode from the nonvolatile memory 403, and displays the two-dimensional barcode on the display device 16, together with a keyword and an input field. The two-dimensional barcode, the keyword, and the input field displayed in step S76 are, for example, similar to the two-dimensional barcode 201, the keyword 202, and the input field 203 shown in Fig. 18.

In step S77, the core control unit 51 of the client apparatus 1 determines whether or not the keyword displayed on the display device 16 has been inputted from the input device 17: if YES, the process proceeds to step S41 of Fig. 21; and if NO, the process repeats step S77.

Referring to Fig. 23, after execution of step 92, in step S93, the server apparatus 2 stores the verification result in the management table 22a, and updates the status report.

In the second embodiment, the status report indicates, for example, in which of the following statuses is each storage device 13.
- erasure flag set
- during erasing
- erasure completed
- erasure completed and erasure certificate unissuable (provisional)
- erasure completed and erasure certificate issuable
- erasure completed and erasure certificate issued
- erasure failed and erasure certificate unissuable

After execution of steps S59 and S93, in step S60A, the server apparatus 2 issues an erasure certificate based on the erasure result and the verification result.

Referring to Fig. 21, after execution of step S70, in step S41, the core control unit 51 of the client apparatus 1 performs a post-process, and shuts down the client apparatus 1.

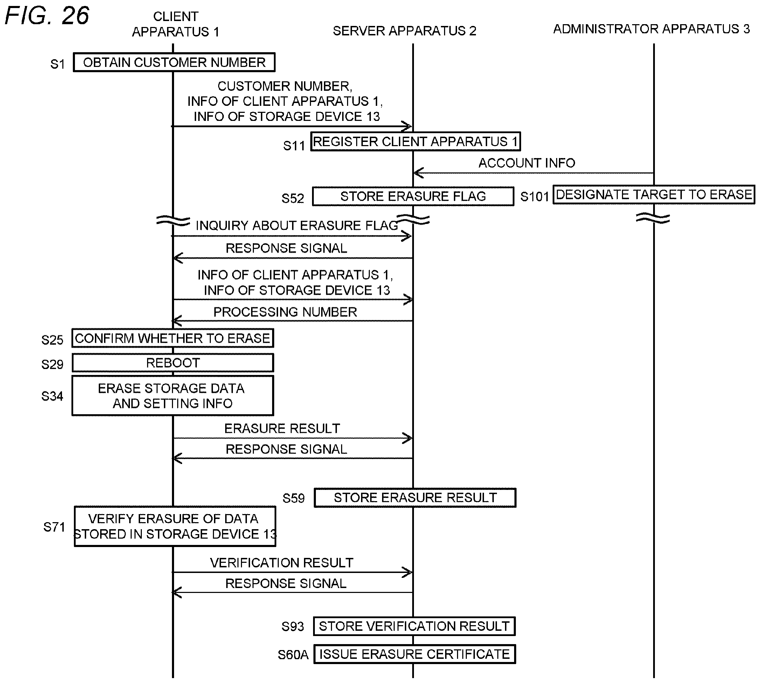

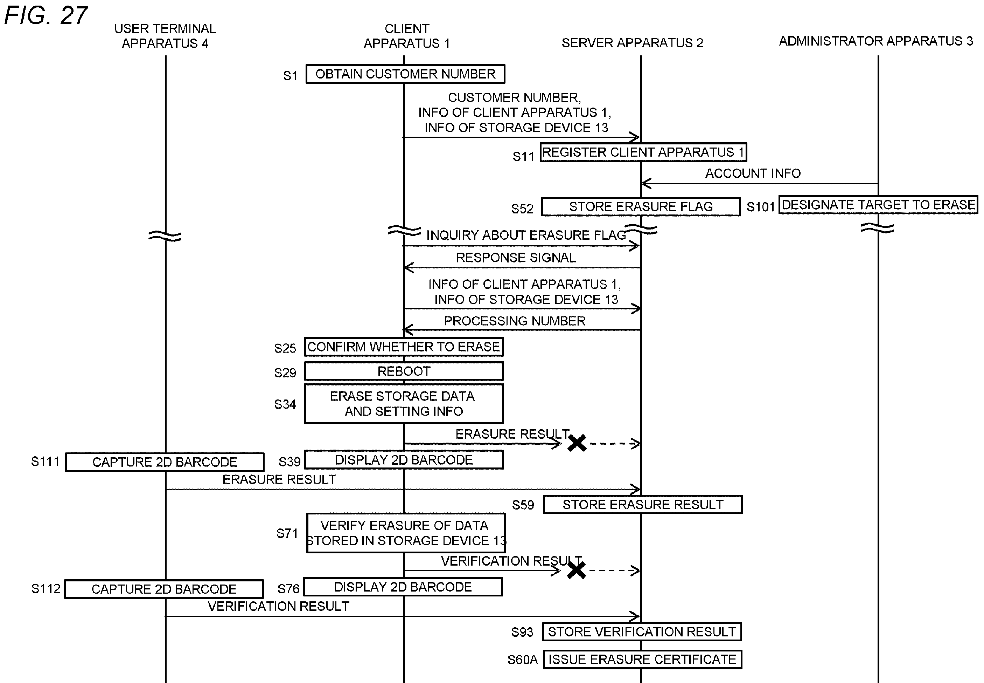

Fig. 26 is a sequence diagram showing operations of the system 100 according to the second embodiment, in a case where the erasure result information and the verification result information have been successfully transmitted via the communication line 6. Fig. 27 is a sequence diagram showing operations of the system 100 according to the second embodiment, in a case where the transmission of the erasure result information and the verification result information via the communication line 6 has failed.

The operation in steps S1 to S59 of Fig. 26 is similar to the case described with reference to Fig. 19.

In a case where all the data stored in the storage device 13 is erased in step S34, the erasure result information is then transmitted to the server apparatus 2, and the response signal is received from the server apparatus 2, in step S71, the client apparatus 1 verifies that the data stored in the storage device 13 has been erased.

After completion of the verification, the client apparatus 1 transmits the verification result information to the server apparatus 2. In a case where a response signal to the verification result information is received from the server apparatus 2 within a predetermined timeout period, the client apparatus 1 ends the process.

In step S93, the server apparatus 2 stores the verification result included in the verification result signal, in the management table 22a. In step S60A, the server apparatus 2 issues an erasure certificate, based on the erasure result included in the erasure result signal, and the verification result included in the verification result signal.

On the other hand, as shown in Fig. 27, in a case where the verification result information transmitted by the client apparatus 1 has not reached the server apparatus 2, or in a case where a response signal to the verification result information has not been received, in step S76, the client apparatus 1 displays the two-dimensional barcode on the display device 16.

In step S112, the user of the client apparatus 1 captures the two-dimensional barcode displayed on the display device 16 of the client apparatus 1, using the user terminal apparatus 4. The processor 41 of the user terminal apparatus 4 decodes the two-dimensional barcode to extract data indicating the verification result, and transmits the data to the server apparatus 2. Thereafter, steps S93 and S60A of Fig. 27 are similar to the corresponding steps of Fig. 26.

### [CONCLUSION)

According to the system of the second embodiment, it is possible to correctly identify and easily erase the data stored in the storage device 13, in a manner similar to that of the system according to the first embodiment. In addition, according to the system of the second embodiment, since the server apparatus 2 is notified of the erasure result upon completion of the erasure of the data stored in the storage device 13, the administrator can recognize the status of the storage device 13 at an early stage. As a result, the user and the administrator do not need to wait for a very long time even when verifying erasure, and usability is less likely to degrade than the case of not verifying erasure.

For example, if the data stored in the storage device 13 has been successfully erased, and the verification result indicates successful erasure, the system operates as follows. At first, after completion of the erasure, the client apparatus 1 transmits the erasure result to the server apparatus 2 using the communication device 15, without displaying the erasure result on the display device 16. In a case where the erasure result has been successfully transmitted, the client apparatus 1 does not display anything on the display device 16, and in a case where the transmission of the erasure result has failed, the client apparatus 1 displays the two-dimensional barcode on the display device 16. At this time, the status report indicates "erasure completed and erasure certificate unissuable (provisional)". Thereafter, after completion of the verification, the client apparatus 1 transmits the verification result to the server apparatus 2 using the communication device 15, without displaying the verification result on the display device 16. In a case where the verification result has been successfully transmitted, the client apparatus 1 does not display anything on the display device 16, and in a case where the transmission of the verification result has failed, the client apparatus 1 displays the two-dimensional barcode on the display device 16. At this time, the status report indicates "erasure completed and erasure certificate issuable".

In a case where the erasure of the data stored in the storage device 13 is completed, but the verification result indicates erasure failed, the system operates as follows. At first, after completion of the erasure, the client apparatus 1 transmits the erasure result to the server apparatus 2 using the communication device 15, without displaying the erasure result on the display device 16. In a case where the erasure result has been successfully transmitted, the client apparatus 1 does not display anything on the display device 16, and in a case where the transmission of the erasure result has failed, the client apparatus 1 displays the two-dimensional barcode on the display device 16. At this time, the status report indicates "erasure completed and erasure certificate unissuable (provisional)". Thereafter, after completion of the verification, the client apparatus 1 displays the verification result on the display device 16, and transmits the verification result to the server apparatus 2 using the communication device 15. In a case where the verification result has been successfully transmitted, the client apparatus 1 does not display anything on the display device 16, and in a case where the transmission of the verification result has failed, the client apparatus 1 displays the two-dimensional barcode on the display device 16. At this time, the status report indicates "erasure failed and erasure certificate unissuable".

In a case where the erasure of the data stored in the storage device 13 has failed, the system operates as follows. At first, after completion of the erasure, the client apparatus 1 displays the erasure result on the display device 16, and transmits the erasure result to the server apparatus 2 using the communication device 15. In a case where the erasure result has been successfully transmitted, the client apparatus 1 does not display anything on the display device 16, and in a case where the transmission of the erasure result has failed, the client apparatus 1 displays the two-dimensional barcode on the display device 16. At this time, the status report indicates "erasure failed and erasure certificate unissuable". The erasure is not verified.

When erasing the data stored in the storage device 13, the client apparatus 1 may display "Now Erasing" on the display device 16. In addition, when verifying the erasure, the client apparatus 1 may display "Now Verifying" on the display device 16.

Even in a case where the transmission of the erasure result or the verification result has failed due to a failure of the communication line 6 or the like, and the two-dimensional barcode is displayed on the display device 16, the erasure result and the verification result are retransmitted upon recovery of the communication line 6, and the display of the two-dimensional barcode is stopped.

The system according to the second embodiment is useful in a case where data stored in the storage device 13 is to be erased, such as a case where the client apparatus 1 is to be discarded, or a case where the client apparatus 1 has been stolen. In particular, in a case where the client apparatus 1 has been stolen, the administrator can erase the data stored in the storage device 13, and recognizes the status of the storage device 13 at an early stage while verifying the erasure.

### [MODIFICATIONS OF SECOND EMBODIMENT]

As described above, it takes a long time to verify the erasure. Therefore, according to the system of the second embodiment, the erasure may be verified step by step. As a result, the user or the administrator can recognize the progress of the verification of the erasure.

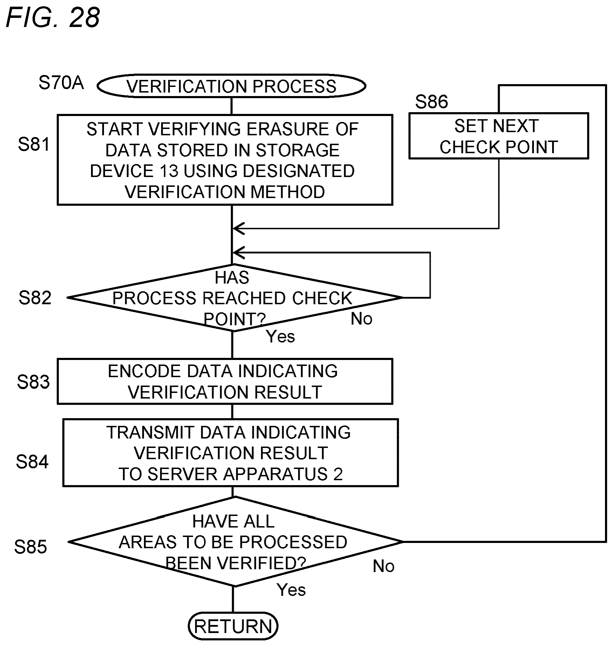

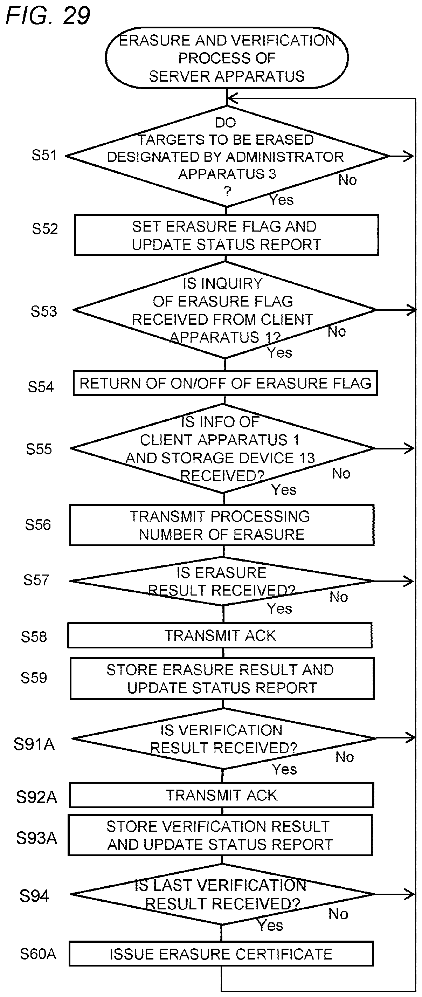

Fig. 28 is a flowchart showing operations of a system according to a modification of the second embodiment, including a subroutine of step S70A (verification process) executed by the processing circuit 401 of the client apparatus 1. Fig. 29 is a flowchart showing operations of the system according to the modification of the second embodiment, including an erasure and verification process of the server apparatus 2 executed by the processor 21.

The process of Fig. 28 is executed instead of step S70 of Fig. 21. In addition, the process of Fig. 29 includes steps S91A to S93A and S94, instead of steps S91 to S93 of Fig. 23.

In this case, a plurality of check points each indicating the progress of the verification of the erasure is set in advance.

In step S81 of Fig. 28, the core control unit 51 of the client apparatus 1 verifies that the data stored in the storage device 13 has been erased, using the erasure control unit 52, according to the designated verification method.

In step S82, the core control unit 51 of the client apparatus 1 determines whether or not the verification of the erasure has reached a predetermined check point: if YES, the process proceeds to step S83; and if NO, the process repeats step S82.

In step S83, the core control unit 51 of the client apparatus 1 encodes data indicating the verification result and the progress thereof, using the data encoding unit 53, according to a predetermined encoding method.

In step S84, the core control unit 51 of the client apparatus 1 transmits the encoded data indicating verification result and the progress thereof, to the server apparatus 2, using the communication device 15.

In step S91A of Fig. 29, the server apparatus 2 determines whether or not the verification result and the progress thereof have been received from the client apparatus 1: if YES, the process proceeds to step S92A; and if NO, the process returns to step S51.

In step S92A, the server apparatus 2 transmits an acknowledgment signal to the client apparatus 1 in response to the verification result and the progress thereof.

In step S85 of Fig. 28, the core control unit 51 of the client apparatus 1 determines whether or not all the areas to be processed, among the entire storage area of the storage device 13, have been verified: if YES, the process proceeds to step S41 of Fig. 21; and if NO, the process proceeds to step S86 of Fig. 28.

In step S86, the core control unit 51 of the client apparatus 1 sets a next check point, and then repeats steps S82 to S86.

Referring to Fig. 29, after execution of step 92A, in step S93A, the server apparatus 2 stores the verification result and the progress thereof in the management table 22a, and updates the status report.

In step S94, the server apparatus 2 determines whether or not the last verification result has been received: if YES, the process proceeds to step S60A; and if NO, the process returns to step S51.

As a result, the client apparatus 1 transmits a plurality of signals to the server apparatus 2, each of the signals indicating to which stage of progress the verification of the erasure has been completed.

In a case of verifying the erasure as shown in Fig. 24, the client apparatus 1 may transmit a plurality of signals to the server apparatus 2, each of the signals indicating to which ratio of the entire storage area of the storage device 13 the verification of the erasure has been completed. In this case, a plurality of check points each indicating the progress of the verification of the erasure are the ratios of the area in which the verification of the erasure is completed, to the entire storage area of the storage device 13, for example, 10%, 20%, 30%, ..., 90%, and 100%. In addition, in a case of verifying the erasure as shown in Fig. 25, the client apparatus 1 may transmit a plurality of signals to the server apparatus 2, each of the signals indicating that the verification of the erasure has been completed up to a number of partial areas randomly extracted from a plurality of partial areas divided from the entire storage area of the storage device 13. In this case, a plurality of check points each indicating the progress of the verification of the erasure are the numbers of small areas 302 extracted from each of the intermediate areas 301, for example, 1, 2, 3,..., 9, and 10.

In a case where the client apparatus 1 does not receive an acknowledgment signal from the server apparatus 2 after transmitting the verification result and the progress thereof in step S84 of Fig. 28, the client apparatus 1 may display, on the display device 16, the two-dimensional barcode including information on the verification result and the progress thereof, in a manner similar to the verification process of Fig. 22. The user of the client apparatus 1 can transmit the data indicating the verification result and the progress thereof, to the server apparatus 2, by capturing the displayed two-dimensional barcode using the user terminal apparatus 4.

According to the processes of Figs. 28 and 29, by verifying the erasure step by step, the administrator can recognize the status of the storage device 13 at an early stage, and can recognize a more accurate verification result with time lapse.

### [ADVANTAGEOUS EFFECTS OF SECOND EMBODIMENT]

According to the second embodiment, the first processing circuit 401 executes the firmware program to: verify the erasure of the storage data; and during or after verification of the erasure, transmit at least one fourth result signal to the server apparatus 2, the at least one fourth result signal indicating that the verification of the erasure of the storage data has been at least partially completed.

With such a configuration, the user and the administrator do not need to wait for a very long time even when verifying erasure, and usability is less likely to degrade than the case of not verifying erasure.

### [OTHER EMBODIMENTS]

As described above, the embodiments have been described as examples of the technology disclosed in the present application. However, the technology in the present disclosure is not limited thereto, and is applicable to embodiments with some changes, replacements, additions, omissions, and the like. In addition, new embodiments can be derived by combining the components described in the aforementioned embodiments.

Therefore, other embodiments will be exemplified below.

When issuing a permission of erasure, the permission of erasure may be issued by designating a model. With addition of comments of user information besides the model, the permission of erasure of a designated model may be issued in a case where the user has another model different from the designated model. A list of designated models may be displayed, and the administrator may issue the permission of erasure. As a result, there is an advantageous effect of managing client apparatuses 1 according to the user's intent, so as to discard the model with a predetermined feature, or discard the model without a predetermined feature (for example, a model not having both forms of a notebook computer and a tablet computer (so-called "2 in 1") is discarded). As a result, for example, there is an advantageous effect of discarding the oldest model first.

In addition, the permission of erasure may be issued by designating a manufacturer of storage devices 13. As a result, there is an advantageous effect of eliminating the client apparatuses 1 supplied from a manufacturer prone to failure.

In addition, a management table 22a may have a comment field in which any character string can be input. By describing user information in the comment field, it is possible to list users each using a plurality of client apparatuses 1, and issue the permission of erasure. As a result, there is an advantageous effect of decreasing the total number of client apparatuses 1. In addition, by describing the user information in the comment field, the client apparatuses 1 can be easy treated per department, section, or the like.

In addition, by transmitting Self-Monitoring Analysis and Reporting Technology (S.M.A.R.T.) information of the client apparatus 1 to a server apparatus 2, a degraded client apparatus 1 may be found, and the permission of erasure may be issued based on the information. In order to evaluate the status of the storage device 13 based on the S.M.A.R.T. information, for example, reallocated sectors count, power cycle count, G-sense error rate, power-on hours, temperature, increases of the above parameters as observed from the server apparatus 2, a combination thereof, or the like may be used. The client apparatus 1 may calculate the status of the client apparatus 1 based on the S.M.A.R.T. information, and transmit the calculated status to the server apparatus 2 as comment information. The server apparatus 2 may recognize the statuses of all the client apparatuses 1 by periodically transmitting the S.M.A.R.T. information from each registered client apparatus 1to the server apparatus 2. The server apparatus 2 may recognize the statuses of all the client apparatuses 1 by periodically calculating, by each registered client apparatus 1, the status of the client apparatus 1 based on the S.M.A.R.T. information of the client apparatus 1, and transmitting the calculated status from each registered client apparatus 1 to the server apparatus 2. as comment information. As a result, there is an advantageous effect of discarding the most degraded client apparatus 1 first.

In addition, by transmitting the power-on hours of the client apparatus 1 to the server apparatus 2, the degraded client apparatus 1 may be found, and the permission of erasure may be issued based on this information. The power-on hours of the client apparatus 1 may be transmitted to the server apparatus 2 as comment information. As a result, there is an advantageous effect of discarding the client apparatus 1 with a longest power-on hours first.

In addition, by transmitting stress information of the client apparatus 1 to the server apparatus 2, the degraded client apparatus 1 may be found, and the permission of erasure may be issued based on this information. The stress of the client apparatus 1 may be transmitted to the server apparatus 2 as comment information. As a result, there is an advantageous effect of discarding the client apparatus 1 used in a high-load environment first.

In the example of Figs. 15, 17, 19, and 20, the client apparatus 1 inquires of the server apparatus 2 about the erasure flag, and separately, transmits the information of the client apparatus 1 and the storage device 13 to the server apparatus 2, but these communications may be performed simultaneously. Upon receiving the information of the client apparatus 1 and the storage device 13 from the client apparatus 1, it may be considered that the server apparatus 2 has received the inquiry about the erasure flag.

In the example of Figs. 15 to 17, 19, and 20, the case has been described where the client apparatus 1 is rebooted, and to transition from the erasure process using the combination of the erasure application program 70 and the firmware program 50, to the erasure process using only the firmware program 50. However, the client apparatus 1 may be configured to transition from the erasure process using the combination of the erasure application program 70 and the firmware program 50, to the erasure process using only the firmware program 50, without rebooting.

In the example of Fig. 2, the case has been described where the client apparatus 1 is provided with only one storage device 13 from which stored data is to be erased. However, the client apparatus 1 may be provided with a plurality of storage devices 13 from which stored data is to be erased. The plurality of storage devices 13 may be configured as, for example, Redundant Arrays of Inexpensive Disks (RAID) device. In this case, the plurality of storage devices 13 are handled as one device, the data stored therein is integrally erased, and the erasure result is integrally verified. Further, the plurality of storage devices 13 may be handled individually, the data stored therein may be erased individually, and the erasure result may be verified individually.

In addition, in the second embodiment, the user or the administrator may select whether or not to verify the erasure. In a case of not verifying the erasure, the process can be completed in the same time as that of the first embodiment.

When erasing data stored in the storage device 13, in a case where the designated secure erase fails, and alternatively, the three-time overwrite erasure is successfully performed, the erasure result information includes the three-time overwrite erasure. The firmware program 50 sets in advance an alternative process to a failed erasure. For example, when the erasure fails, the erasing method may be changed in the order of secure erase -> three-time overwrite erasure -> one-time overwrite erasure.

As described above, the embodiments have been described as examples of the technology according to the present disclosure. The accompanying drawings and the detailed description have been provided for this purpose.

Accordingly, the constituent elements described in the accompanying drawings 1and the detailed description may include not only constituent elements essential to solving the problem, but also constituent elements not essential to solving the problem, in order to exemplify the technology. Therefore, even when those non-essential constituent elements are described in the accompanying drawings and the detailed description, those non-essential constituent elements should not be considered essentials.

In addition, since the above-described embodiments are intended to exemplify the technology of the present disclosure, it is possible to make various changes, replacements, additions, omissions, and the like within the scope of claims or the equivalent thereof.

### [SUMMARY OF PRESENT DISCLOSURE]

An electronic apparatus of a first aspect of the present disclosure An electronic apparatus is provided with: a first processing circuit; a communication circuit capable of communicating with a server apparatus via a communication line; a first storage device that stores storage data including an operating system, application programs, and user data; and a second storage device that stores a first firmware program and first setting information. The first firmware program is executed by the first processing circuit to control operations of the electronic apparatus based on the first setting information. In a case where the first processing circuit receives a first erasure command from the server apparatus, the first erasure command instructing erasure of the storage data and the first setting information, the first processing circuit executes the first firmware program to erase the storage data from the first storage device, and erase the first setting information from the second storage device.

According to an electronic apparatus of a second aspect of the present disclosure, the electronic apparatus of the first aspect is further configured as follows. The first setting information includes a password for restricting change of the first setting information.

According to an electronic apparatus of a third aspect of the present disclosure, the electronic apparatus of the first or second aspect is further configured as follows. After completion of the erasure of the storage data and the first setting information, the first processing circuit executes the firmware program to transmit a first result signal to the server apparatus, the first result signal indicating the completion of the erasure of the storage data and the first setting information.

According to an electronic apparatus of a fourth aspect of the present disclosure, the electronic apparatus of one of the first to third aspect is further configured as follows. The electronic apparatus is further provided with: a second processing circuit; and a third storage device that stores a second firmware program and second setting information. The second firmware program is executed by the second processing circuit to enable, based on the second setting information, an external apparatus connected via the communication line to control operations of the electronic apparatus. In a case where the first processing circuit receives a second erasure command from the server apparatus, the second erasure command instructing erasure of the storage data and the second setting information, the first processing circuit executes the first firmware program to erase the storage data from the first storage device, and erase the second setting information from the third storage device.

According to an electronic apparatus of a fifth aspect of the present disclosure, the electronic apparatus of the fourth aspect is further configured as follows. After completion of the erasure of the storage data and the second setting information, the first processing circuit executes the firmware program to transmit a second result signal to the server apparatus, the second result signal indicating the completion of the erasure of the storage data and the second setting information.

According to an electronic apparatus of a sixth aspect of the present disclosure, the electronic apparatus of one of the first to fifth aspect is further configured as follows. The electronic apparatus is further provided with: a third processing circuit; and a fourth storage device that stores a third firmware program and third setting information. The third firmware program is executed by the third processing circuit to encrypt and decrypt the storage data based on the third setting information. In a case where the first processing circuit receives a third erasure command from the server apparatus, the third erasure command instructing erasure of the storage data and the third setting information, the first processing circuit executes the first firmware program to erase the storage data from the first storage device, and erase the third setting information from the fourth storage device.

According to an electronic apparatus of a seventh aspect of the present disclosure, the electronic apparatus of the sixth aspect is further configured as follows. After completion of the erasure of the storage data and the third setting information, the first processing circuit executes the firmware program to transmit a third result signal to the server apparatus, the third result signal indicating the completion of the erasure of the storage data and the third setting information.

According to an electronic apparatus of an eighth aspect of the present disclosure, the electronic apparatus of one of the first to seventh aspect is further configured as follows. The first processing circuit executes the firmware program to: verify the erasure of the storage data; and during or after verification of the erasure, transmit at least one fourth result signal to the server apparatus, the at least one fourth result signal indicating that the verification of the erasure of the storage data has been at least partially completed.

A system of a ninth aspect of the present disclosure is provided with: a plurality of electronic apparatuses, each of which is the electronic apparatus of one of the first to eighth aspects; and the server apparatus.

According to a system of a tenth aspect of the present disclosure, the system of the ninth aspect is further configured as follows. The electronic apparatus transmits a first signal to the server apparatus to register the electronic apparatus with the server apparatus, the first signal including identification information for uniquely identifying the first storage device. The electronic apparatus transmits a second signal to the server apparatus, the second signal including the identification information of the first storage device, the second signal inquiring whether or not it is registered with the server apparatus that data stored in the first storage device is to be erased. In a case where the identification information of the first storage device included in the second signal is identical to the identification information of the first storage device included in the first signal, and it is registered with the server apparatus that the storage data and the first setting information are to be erased, the server apparatus transmits the first erasure command to the electronic apparatus.

According to a system of an eleventh aspect of the present disclosure, the system of the ninth or tenth aspect is further configured as follows. The server apparatus obtains erasure completion information from the electronic apparatus, the erasure completion information indicating completion of the erasure of the storage data. The server apparatus issues an erasure certificate based on the erasure completion information, the erasure certificate certifying the completion of the erasure of the storage data.

A method of a twelfth aspect of the present disclosure erases data stored in an electronic apparatus. The electronic apparatus includes: a first processing circuit; a communication circuit capable of communicating with a server apparatus via a communication line; a first storage device that stores storage data including an operating system, application programs, and user data; and a second storage device that stores a first firmware program and first setting information. The first firmware program is executed by the first processing circuit to control operations of the electronic apparatus based on the first setting information. In a case where the processing circuit receives a first erasure command from the server apparatus, the first erasure command instructing erasure of the storage data and the first setting information, the method includes executing the first firmware program by the processing circuit to erase the storage data from the first storage device, and erase the first setting information from the second storage device.

### INDUSTRIAL APPLICABILITY

The electronic apparatus according to the aspect of the present disclosure is useful for erasing data stored in the storage device.

### REFERENCE SIGNS LIST

1, 1-1 to 1-3: client apparatus
2: server apparatus
3: administrator apparatus
4: user terminal apparatus
5: base station apparatus
6: communication line
10: bus
11: processor
12: RAM
13: storage device
14A: UEFI Controller
14B: auxiliary controller
14C: TPM controller
15: communication device
16: display device
17: input device
20: bus
21: processor
22: RAM
23: storage device
25: communication device
30: bus
31: processor
32: RAM
33: storage device
35: communication device
36: display device
37: input device
40: bus
41: processor
42: RAM
43: storage device
45: communication device
46: display device
47: input device
48: camera
50: firmware program
51: core control unit
52: erasure control unit
53: data encoding unit
54: two-dimensional barcode generation unit
60: operating system
61: apparatus information monitor
62: power management unit
70: erasure application program
71: core control unit
81: core control unit
82: read unit
83: write unit
84: erasure unit
100: system
200: display screen
201: two-dimensional barcode
202: keyword
203: input field
301: intermediate area
302: small area
400: bus
401: processing circuit
402: volatile memory
403: nonvolatile memory
404: input/output interface (I/F)
410: bus
411: processing circuit
412: volatile memory
413: nonvolatile memory
414: input/output interface (I/F)
420: bus
421: processing circuit
422: volatile memory
423: nonvolatile memory
424: input/output interface (I/F)

## Claims

1. An electronic apparatus comprising:
a first processing circuit;
a communication circuit capable of communicating with a server apparatus via a communication line;
a first storage device that stores storage data including an operating system, application programs, and user data; and
a second storage device that stores a first firmware program and first setting information,
wherein the first firmware program is executed by the first processing circuit to control operations of the electronic apparatus based on the first setting information, and
wherein, in a case where the first processing circuit receives a first erasure command from the server apparatus, the first erasure command instructing erasure of the storage data and the first setting information, the first processing circuit executes the first firmware program to erase the storage data from the first storage device, and erase the first setting information from the second storage device.

2. The electronic apparatus as claimed in claim 1,
wherein the first setting information includes a password for restricting change of the first setting information.

3. The electronic apparatus as claimed in claim 1,
wherein, after completion of the erasure of the storage data and the first setting information, the first processing circuit executes the firmware program to transmit a first result signal to the server apparatus, the first result signal indicating the completion of the erasure of the storage data and the first setting information.

4. The electronic apparatus as claimed in claim 1, further comprising:
a second processing circuit; and
a third storage device that stores a second firmware program and second setting information,
wherein the second firmware program is executed by the second processing circuit to enable, based on the second setting information, an external apparatus connected via the communication line to control operations of the electronic apparatus, and
wherein, in a case where the first processing circuit receives a second erasure command from the server apparatus, the second erasure command instructing erasure of the storage data and the second setting information, the first processing circuit executes the first firmware program to erase the storage data from the first storage device, and erase the second setting information from the third storage device.

5. The electronic apparatus as claimed in claim 4,
wherein, after completion of the erasure of the storage data and the second setting information, the first processing circuit executes the firmware program to transmit a second result signal to the server apparatus, the second result signal indicating the completion of the erasure of the storage data and the second setting information.

6. The electronic apparatus as claimed in claim 1, further comprising:
a third processing circuit; and
a fourth storage device that stores a third firmware program and third setting information,
wherein the third firmware program is executed by the third processing circuit to encrypt and decrypt the storage data based on the third setting information, and
wherein, in a case where the first processing circuit receives a third erasure command from the server apparatus, the third erasure command instructing erasure of the storage data and the third setting information, the first processing circuit executes the first firmware program to erase the storage data from the first storage device, and erase the third setting information from the fourth storage device.

7. The electronic apparatus as claimed in claim 6,
wherein, after completion of the erasure of the storage data and the third setting information, the first processing circuit executes the firmware program to transmit a third result signal to the server apparatus, the third result signal indicating the completion of the erasure of the storage data and the third setting information.

8. The electronic apparatus as claimed in claim 1,
wherein the first processing circuit executes the firmware program to:
verify the erasure of the storage data; and
during or after verification of the erasure, transmit at least one fourth result signal to the server apparatus, the at least one fourth result signal indicating that the verification of the erasure of the storage data has been at least partially completed.

9. A system comprising:
a plurality of electronic apparatuses, each of which is the electronic apparatus as claimed in any one of claims 1 to 8; and
the server apparatus.

10. The system as claimed in claim 9,
wherein the electronic apparatus transmits a first signal to the server apparatus to register the electronic apparatus with the server apparatus, the first signal including identification information for uniquely identifying the first storage device; and
wherein the electronic apparatus transmits a second signal to the server apparatus, the second signal including the identification information of the first storage device, the second signal inquiring whether or not it is registered with the server apparatus that data stored in the first storage device is to be erased, and
wherein, in a case where the identification information of the first storage device included in the second signal is identical to the identification information of the first storage device included in the first signal, and it is registered with the server apparatus that the storage data and the first setting information are to be erased, the server apparatus transmits the first erasure command to the electronic apparatus.

11. The system as claimed in claim 9,
wherein the server apparatus obtains erasure completion information from the electronic apparatus, the erasure completion information indicating completion of the erasure of the storage data; and
wherein the server apparatus issues an erasure certificate based on the erasure completion information, the erasure certificate certifying the completion of the erasure of the storage data.

12. A method of erasing data stored in an electronic apparatus,
wherein the electronic apparatus includes:
a first processing circuit;
a communication circuit capable of communicating with a server apparatus via a communication line;
a first storage device that stores storage data including an operating system, application programs, and user data; and
a second storage device that stores a first firmware program and first setting information,
wherein the first firmware program is executed by the first processing circuit to control operations of the electronic apparatus based on the first setting information, and
wherein, in a case where the processing circuit receives a first erasure command from the server apparatus, the first erasure command instructing erasure of the storage data and the first setting information, the method includes executing the first firmware program by the processing circuit to erase the storage data from the first storage device, and erase the first setting information from the second storage device.

## Amended claims

### Amended claims under Art. 19.1 PCT

**1.** An electronic apparatus comprising:
a first processing circuit;
a second processing circuit;
a communication circuit capable of communicating with a server apparatus via a communication line;
a first storage device that stores storage data including an operating system, application programs, and user data;
a second storage device that stores a first firmware program and first setting information; and
a third storage device that stores a second firmware program and second setting information,
wherein the first firmware program is executed by the first processing circuit to control operations of the electronic apparatus based on the first setting information,
wherein the second firmware program is executed by the second processing circuit to enable, based on the second setting information, an external apparatus connected via the communication line to control operations of the electronic apparatus,
wherein, in a case where the first processing circuit receives a first erasure command from the server apparatus, the first erasure command instructing erasure of the storage data and the first setting information, the first processing circuit executes the first firmware program to erase the storage data from the first storage device, and erase the first setting information from the second storage device, and
wherein, in a case where the first processing circuit receives a second erasure command from the server apparatus, the second erasure command instructing erasure of the storage data and the second setting information, the first processing circuit executes the first firmware program to erase the storage data from the first storage device, and erase the second setting information from the third storage device.

**2.** The electronic apparatus as claimed in claim 1,
wherein the first setting information includes a password for restricting change of the first setting information.

**3.** The electronic apparatus as claimed in claim 1,
wherein, after completion of the erasure of the storage data and the first setting information, the first processing circuit executes the firmware program to transmit a first result signal to the server apparatus, the first result signal indicating the completion of the erasure of the storage data and the first setting information.

**5.** The electronic apparatus as claimed in claim 1,
wherein, after completion of the erasure of the storage data and the second setting information, the first processing circuit executes the firmware program to transmit a second result signal to the server apparatus, the second result signal indicating the completion of the erasure of the storage data and the second setting information.

**6.** The electronic apparatus as claimed in claim 1, further comprising:
a third processing circuit; and
a fourth storage device that stores a third firmware program and third setting information,
wherein the third firmware program is executed by the third processing circuit to encrypt and decrypt the storage data based on the third setting information, and
wherein, in a case where the first processing circuit receives a third erasure command from the server apparatus, the third erasure command instructing erasure of the storage data and the third setting information, the first processing circuit executes the first firmware program to erase the storage data from the first storage device, and erase the third setting information from the fourth storage device.

**7.** The electronic apparatus as claimed in claim 6,
wherein, after completion of the erasure of the storage data and the third setting information, the first processing circuit executes the firmware program to transmit a third result signal to the server apparatus, the third result signal indicating the completion of the erasure of the storage data and the third setting information.

**8.** The electronic apparatus as claimed in claim 1,
wherein the first processing circuit executes the firmware program to:
verify the erasure of the storage data; and
during or after verification of the erasure, transmit at least one fourth result signal to the server apparatus, the at least one fourth result signal indicating that the verification of the erasure of the storage data has been at least partially completed.

**9.** A system comprising:
a plurality of electronic apparatuses, each of which is the electronic apparatus as claimed in any one of claims 1 to 3, 5 to 8; and
the server apparatus.

**10.** The system as claimed in claim 9,
wherein the electronic apparatus transmits a first signal to the server apparatus to register the electronic apparatus with the server apparatus, the first signal including identification information for uniquely identifying the first storage device; and
wherein the electronic apparatus transmits a second signal to the server apparatus, the second signal including the identification information of the first storage device, the second signal inquiring whether or not it is registered with the server apparatus that data stored in the first storage device is to be erased, and
wherein, in a case where the identification information of the first storage device included in the second signal is identical to the identification information of the first storage device included in the first signal, and it is registered with the server apparatus that the storage data and the first setting information are to be erased, the server apparatus transmits the first erasure command to the electronic apparatus.

**11.** The system as claimed in claim 9,
wherein the server apparatus obtains erasure completion information from the electronic apparatus, the erasure completion information indicating completion of the erasure of the storage data; and
wherein the server apparatus issues an erasure certificate based on the erasure completion information, the erasure certificate certifying the completion of the erasure of the storage data.

**12.** A method of erasing data stored in an electronic apparatus,
wherein the electronic apparatus includes:
a first processing circuit;
a second processing circuit;
a communication circuit capable of communicating with a server apparatus via a communication line;
a first storage device that stores storage data including an operating system, application programs, and user data; and
a second storage device that stores a first firmware program and first setting information, and
a third storage device that stores a second firmware program and second setting information,
wherein the first firmware program is executed by the first processing circuit to control operations of the electronic apparatus based on the first setting information, and
wherein the second firmware program is executed by the second processing circuit to enable, based on the second setting information, an external apparatus connected via the communication line to control operations of the electronic apparatus,
wherein, in a case where the first processing circuit receives a first erasure command from the server apparatus, the first erasure command instructing erasure of the storage data and the first setting information, the method includes executing the first firmware program by the first processing circuit to erase the storage data from the first storage device, and erase the first setting information from the second storage device, and
wherein, in a case where the first processing circuit receives a second erasure command from the server apparatus, the second erasure command instructing erasure of the storage data and the second setting information, the method includes executing the first firmware program to erase the storage data from the first storage device, and erase the second setting information from the third storage device.
